# EUROPEAN PATENT APPLICATION

(11) **EP 4 599 975 A1**
(43) Date of publication of application: **13.08.2025**
(21) Application number: 23912188.2
(22) Date of filing: 26.12.2023
(51) Int. Cl.: B23K 9/23, B23K 9/02, B23K 35/30, C22C 18/00, C22C 18/04, C23C 2/06

(54) **WELDED JOINT**

(30) Priority: 26.12.2022 JP 2022208667
(71) Applicant: NIPPON STEEL CORPORATION, Chiyoda-ku Tokyo 100-8071 (JP)
(72) Inventor: URANAKA, Masaaki, Tokyo 100-8071 (JP); MITSUNOBU, Takuya, Tokyo 100-8071 (JP); MATSUBA, Masahiro, Tokyo 100-8071 (JP); NISHIKADO, Minae, Tokyo 100-8071 (JP)
(74) Representative: Vossius & Partner Patentanwälte Rechtsanwälte mbB
(86) International application number: PCT/JP2023/046781
(87) International publication number: WO 2024/143410

(57) **Abstract**

A welded joint includes a first steel sheet and a second steel sheet connected to a weld bead part whose extension direction is set as a long side in plan view, wherein: the first steel sheet and the second steel sheet has a heat-affected zone located around the weld bead part, and a non-heat-affected zone not affected by heat due to welding; at least either the first steel sheet or the second steel sheet has a base iron and a first plating layer on the base iron in the non-heat-affected zone; the first plating layer is a plating layer having a chemical composition containing, by mass%, Al: 0.50 to 5.00%, Mg: 0.50 to less than 3.00%, and Fe: 0.01 to 15.00%, and selectively containing one kind or more kinds selected from a group consisting of an element group A, an element group B, an element group C, an element group D, an element group E, an element group F, and an element group G, with the balance composed of Zn of 5.0000 mass% or more and impurities; a second plating layer containing a Mg-Zn structure is present on the weld bead part or on the heat-affected zone; and when regarding a region, toward a direction being orthogonal to the extension direction of the weld bead part and separating from a toe defined in JIS Z3001 (2018), with an end portion position on the toe side of the second plating layer set as a starting point, in a range from the starting point to 100 µm, a cross section cut in a direction orthogonal to the extension direction is observed by an electron microscope, an average thickness of an Fe-Zn layer formed of an Fe-Zn-based intermetallic compound phase is 2.0 µm or more, and a sum total of lengths in the separating direction of Mg-Zn structures included within 0.5 µm of an interface between the second plating layer and a base material steel sheet which is the base iron or the heat-affected zone is 10 µm or less, in the second plating layer.

## Description

### [Technical Field]

The present invention relates to a welded joint.

### [Background Art]

Automobile members such as automobile underbody members and various construction material members are often manufactured using welded joints made by welding a plurality of steel materials. These automobile members and construction material members are used under the condition of being exposed to various environments, and thus the manufactured welded joints are desired to have excellent corrosion resistance. Therefore, various zinc-based plated steel sheets, such as alloyed hot-dip galvanized steel sheets, are used as materials for such welded joints.

Here is the following specific problem when galvanized steel sheets are welded to manufacture welded joints. There is liquid metal embrittlement (LME) resulting from hot dipping near a "toe" defined in JIS Z3001 (2018).

To solve the problem of the LME as described above, various proposals have been made in the past. For example, in Patent Document 1 below, a plated steel material is proposed, the plated steel material including: a steel sheet; and a plating layer disposed on a surface of the steel sheet and including a Zn-Al-Mg alloy layer, wherein in a cross section of the Zn-Al-Mg alloy layer, an area fraction of a MnZn₂ phase is 45 to 75%, a total area fraction of a MgZn₂ phase and an Al phase is 70% or more, and an area fraction of a Zn-Al-MgZn₂ ternary eutectic structure is 0 to 5%, and the plating layer has a predetermined chemical composition.

### [Prior Art Document]

### [Patent Document]

Patent Document 1: International Publication WO 2018/139620

### [Disclosure of the Invention]

### [Problems to Be Solved by the Invention]

Here, the problem of the LME can be solved by using the plated steel material proposed in Patent Document 1 above. However, as a result of being intensively studied by the present inventors, the technique proposed in Patent Document 1 above still has room for improvement, and further improvement is desired with regard to corrosion resistance of a near-toe zone in the welded joint using the galvanized steel sheet as the material.

Thus, the present invention was made in consideration of the above problem, and an object of the present invention is to provide a welded joint capable of improving corrosion resistance of a near-toe zone while suppressing LME during welding.

### [Means for Solving the Problems]

To solve the above problem, as a result of being intensively studied by the present inventors, they have conceived a_mechanism as follows. That is, formation of a layer formed of an Fe-Zn-based intermetallic compound phase (hereinafter, referred to as an Fe-Zn layer) is promoted during welding. Such an Fe-Zn layer suppresses contact between a structure formed of a Mg-Zn-based intermetallic compound phase similarly formed during welding (hereinafter, referred to as a Mg-Zn structure) and a base material steel sheet (base iron or heat-affected zone). In other words, a contact area between the Mg-Zn structure and the base material steel sheet is in a sufficiently small state at an interface between a plating layer on the heat-affected zone (a second plating layer to be described later) and the base material steel sheet. This causes suppression of LME.

Based on such findings, as a result of being further studied by the present inventors, they have been able to find a technique capable of bringing the contact area between the Mg-Zn structure and the base material steel sheet into the sufficiently small state in a plating layer of a near-toe zone after welding such as arc welding or laser welding by improving a plating structure in the near-toe zone of a welded joint.

The gist of the present invention completed based on such findings is as follows.
(1) A welded joint includes a first steel sheet and a second steel sheet connected to a weld bead part whose extension direction is set as a long side in plan view, wherein:
   the first steel sheet and the second steel sheet have a heat-affected zone located around the weld bead part, and a non-heat-affected zone not affected by heat due to welding;
   at least either the first steel sheet or the second steel sheet has a base iron and a first plating layer on the base iron in the non-heat-affected zone;
   the first plating layer is a plating layer having a chemical composition containing, by mass%,
   Al: 0.50 to 5.00%
   Mg: 0.50 to less than 3.00%
   Fe: 0.01 to 15.00%, and
      selectively containing one kind or more kinds selected from a group consisting of an element group A, an element group B, an element group C, an element group D, an element group E, an element group F, and an element group G described below, with the balance composed of Zn of 5.0000 mass% or more and impurities;
   a second plating layer containing a Mg-Zn structure is present on the weld bead part or on the heat-affected zone; and
   when regarding a region, toward a direction being orthogonal to the extension direction of the weld bead part and separating from a toe defined in JIS Z3001 (2018), with an end portion position on the toe side of the second plating layer set as a starting point, in a range from the starting point to 100 µm, a cross section cut in a direction orthogonal to the extension direction is observed by an electron microscope, an average thickness of an Fe-Zn layer formed of an Fe-Zn-based intermetallic compound phase is 2.0 µm or more, and a sum total of lengths in the separating direction of Mg-Zn structures included within 0.5 µm of an interface between the second plating layer and a base material steel sheet which is the base iron or the heat-affected zone is 10 µm or less, in the second plating layer.

   [Element group A]: one kind or two kinds selected from a group consisting of Si: 10.00% or less, and Ca: 4.00% or less
   [Element group B]: one kind or more kinds selected from a group consisting of Sb: 0.5000% or less, Pb: 0.5000% or less, and Sr: 0.5000% or less
   [Element group C]: one kind or more kinds selected from a group consisting of Cu: 1.0000% or less, Ti: 1.0000% or less, Cr: 1.0000% or less, Nb: 1.0000% or less, Ni: 1.0000% or less, Mn: 1.0000% or less, and Mo: 1.0000% or less
   [Element group D]: Sn: 1.0000% or less
   [Element group E]: one kind or more kinds selected from a group consisting of Zr: 1.0000% or less, Ag: 1.0000% or less, and Li: 1.0000% or less
   [Element group F]: one kind or more kinds selected from a group consisting of La: 0.5000% or less, Ce: 0.5000% or less, and Y: 0.5000% or less
   [Element group G]: B: 0.5000% or less
(2) The welded joint according to the above (1), having a chemical composition containing the element group A.
(3) The welded joint according to the above (1), having a chemical composition containing the element group B.
(4) The welded joint according to the above (1), having a chemical composition containing the element group C.
(5) The welded joint according to the above (1), having a chemical composition containing the element group D.
(6) The welded joint according to the above (1), having a chemical composition containing the element group E.
(7) The welded joint according to the above (1), having a chemical composition containing the element group F.
(8) The welded joint according to the above (1), having a chemical composition containing the element group G.
(9) The welded joint according to any one of the above (1) to (8), wherein a tensile strength of the non-heat-affected zone of the first steel sheet and the second steel sheet is 780 MPa grade or more.
(10) The welded joint according to any one of the above (1) to (8), wherein the first plating layer contains Mg: 1.5 mass% or less, and contains Al: 3.0 mass% or less.
(11) The welded joint according to the above (9), wherein the first plating layer contains Mg: 1.5 mass% or less, and contains Al: 3.0 mass% or less.
(12) The welded joint according to any one of the above (1) to (8), wherein the average thickness of the Fe-Zn layer is 5 µm or more.
(13) The welded joint according to the above (9), wherein the average thickness of the Fe-Zn layer is 5 µm or more.
(14) The welded joint according to any one of the above (1) to (8), wherein a sum total of lengths in the separating direction of Mg-Zn structures included within 0.5 µm of the interface between the second plating layer and the base material steel sheet is 5 µm or less.
(15) The welded joint according to the above (9), wherein a sum total of lengths in the separating direction of Mg-Zn structures included within 0.5 µm of the interface between the second plating layer and the base material steel sheet is 5 µm or less.
(16) The welded joint according to any one of the above (1) to (8), wherein a sum total of lengths in the separating direction of Mg-Zn structures included within 0.5 µm of the interface between the second plating layer and the base material steel sheet is 1 µm or less.
(17) The welded joint according to the above (9), wherein a sum total of lengths in the separating direction of Mg-Zn structures included within 0.5 µm of the interface between the second plating layer and the base material steel sheet is 1 µm or less.
(18) The welded joint according to any one of the above (1) to (8), wherein a depth at which a C concentration is 0.05% or less by mass% is 10 µm or more in a measured result obtained by being measured by a glow discharge optical emission spectrometry in a depth direction of the non-heat-affected zone of the first steel sheet and the second steel sheet.
(19) The welded joint according to the above (9), wherein a depth at which a C concentration is 0.05% or less by mass% is 10 µm or more in a measured result obtained by being measured by a glow discharge optical emission spectrometry in a depth direction of the non-heat-affected zone of the first steel sheet and the second steel sheet.

### [Effect of the Invention]

According to the present invention as explained above, it becomes possible to further improve corrosion resistance in a near-toe zone.

### [Brief Description of the Drawings]

[FIG. 1A] FIG. 1A is an explanatory view schematically illustrating an example of a structure of a welded joint according to an embodiment of the present invention.
[FIG. 1B] FIG. 1B is an explanatory view schematically illustrating an example of a structure of a welded joint according to another embodiment.
[FIG. 1C] FIG. 1C is an explanatory view schematically illustrating an example of a structure of a welded joint according to the other embodiment.
[FIG. 2] FIG. 2 is an explanatory view for explaining the welded joint according to the embodiment illustrated in FIG. 1A.
[FIG. 3] FIG. 3 is an explanatory view for explaining a non-heat-affected zone according to the embodiment.
[FIG. 4] FIG. 4 is an explanatory view for explaining the welded joint according to the embodiment.
[FIG. 5] FIG. 5 is an explanatory view for explaining the welded joint according to the embodiment.

### [Embodiments for Carrying out the Invention]

A preferred embodiment of the present invention will be explained in detail with reference to the accompanying drawings below. Note that in this specification and the drawings, components that have substantially the same functional configuration will be omitted from the duplicated explanation by applying the same codes.

### (Regarding welded joint)

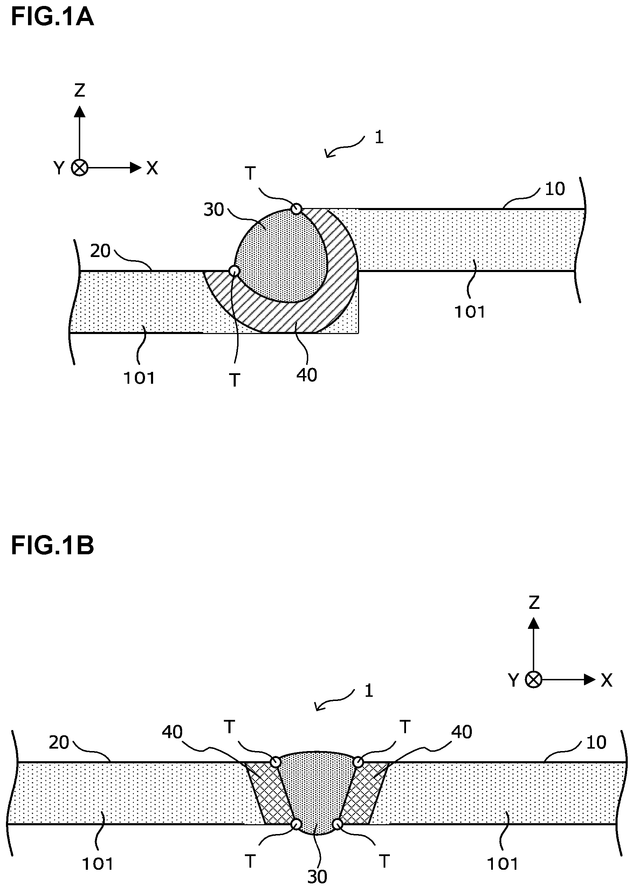

First, an overall configuration of a welded joint according to an embodiment of the present invention will be explained with reference to FIG. 1A. FIG. 1A is an explanatory view schematically illustrating an example of a structure of a welded joint according to this embodiment.

Note that in the following, for convenience, explanations shall be appropriately performed using a coordinate system as illustrated in FIG. 1A. In the coordinate system, a normal direction with respect to a surface of a second steel sheet 20 is set as a Z-axis direction, an extension direction of a weld bead part 30 is set as a Y-axis direction, and a direction orthogonal to the Z-axis direction and the Y-axis direction is set as an X-axis direction. In FIG. 1A, a welded joint in which two steel sheets are welded by arc welding is taken as an example to be illustrated.

FIG. 1A schematically illustrates the overall configuration of a welded joint obtained by lap fillet welding of a first steel sheet and a second steel sheet by arc welding or laser welding, and illustrates a cross section of the welded joint perpendicular to the extension direction of a weld bead part. As schematically illustrated in FIG. 1A, a welded joint 1 according to this embodiment has a first steel sheet 10, the second steel sheet 20, and the weld bead part 30, and a heat-affected zone 40.

Here, as a material of at least one of the first steel sheet 10 and the second steel sheet 20 constituting the welded joint 1, various plated steel sheets are preferably used, and as a material of both the first steel sheet 10 and the second steel sheet 20 constituting the welded joint 1, a plated steel sheet having a first plating layer as described in detail below is more preferably used.

Further, the weld bead part 30 is a section formed by arc welding or laser welding, and interdiffusion of constituent elements occurs between a welding wire which is used as necessary during welding and the steel sheet as the material (hereinafter, referred to as a "material steel sheet"). The weld bead part 30 is formed by oxidation of such diffused elements. Therefore, in FIG. 1A, a joint interface between the weld bead part 30 and the first steel sheet 10 or the second steel sheet 20 is illustrated as a smooth curve and a straight line for convenience of illustration, but arc plasma or the like vibrates molten metal during welding, thereby causing an actual joint interface to have a complex curved surface. Further, such a weld bead part 30 extends along the Y-axis direction in the figure, and such a weld bead part 30 joins the first steel sheet 10 and the second steel sheet 20.

Note that components constituting such a weld bead part 30 vary depending on the type of the welding wire to be used, a chemical composition of the material steel sheet, or the like, thus making it difficult to unambiguously determine such components as to cover all possibilities. However, when at least a plating layer is present at an overlapped part (lap) which is a section where the material steel sheets are overlapped, such a weld bead part 30 is generally composed mainly of oxides of "easily oxidizable elements" (a content of the oxides of the "easily oxidizable elements" is 50 mass% or more) among the various elements constituting the plating layer present in at least the overlapped part. As such easily oxidizable elements, for example, Al, Mg, Si, and the like can be cited.

Further, when a section corresponding to the weld bead part 30 in the welded joint 1 focused thereon is identified, an etching process, using an etching solution, of a cross section of the welded joint 1 including the weld bead part 30, the heat-affected zone 40, and a non-heat-affected zone allows easy visualization. For example, as the etching solution, nital (composition: ethanol of 95%, a sulfuric acid of 5%), an etching solution in which sodium dodecylbenzenesulfonate of 60 g, a picric acid of 36 g, ethanol of 60 cc, and a household detergent (for example, a generally used one such as a dishwashing detergent) of 60 cc are mixed with respect to water of 2400 cc, or the like can be used.

Note that the oxides formed during welding are broadly classified into two kinds of scale and slag. The scale which is the oxide formed on a surface of the weld bead part 30 during welding contains Fe of 50% or more by mass% in excluding oxygen, and the balance is composed of easily oxidizable elements and impurities. Further, the slag contains easily oxidizable elements of 50 % or more by mass% in excluding oxygen, and the balance is composed of Fe of less than 50 mass% and impurities. Here, as concrete examples of the "easily oxidizable elements", Ca, Mg, In, Bi, Cr, Zr, Li, La, Ce, Sr, Y, Si, Mn, Al, and Ti can be cited.

Note that the above scale and slag can be easily distinguished by performing a component analysis with a scanning electron microscope (SEM) provided with an electron probe micro analyzer (EPMA). In more detail, a cross section of a section appearing to be the scale or the slag is subjected to a point analysis with the EPMA, and judged according to which of the contents of the above "easily oxidizable elements" and Fe is 50 mass% or more. As long as the content of Fe is 50 mass% or more, the focused section can be judged the slag, and as long as the content of the "easily oxidizable elements" is 50 mass% or more, the focused section can be judged the scale.

Here, in JIS Z3001 (2018), an "intersection of a surface of a base iron and a surface of a weld bead" is defined as a "toe". In the welded joint 1 as illustrated in FIG. 1A, an intersection of a surface of the weld bead part 30, and, a surface of the base iron 101 or the heat-affected zone 40 of the first steel sheet 10 or the second steel sheet 20 corresponds to such a "toe". The welded joint 1 according to this embodiment focuses on corrosion resistance in a near portion of such a toe T.

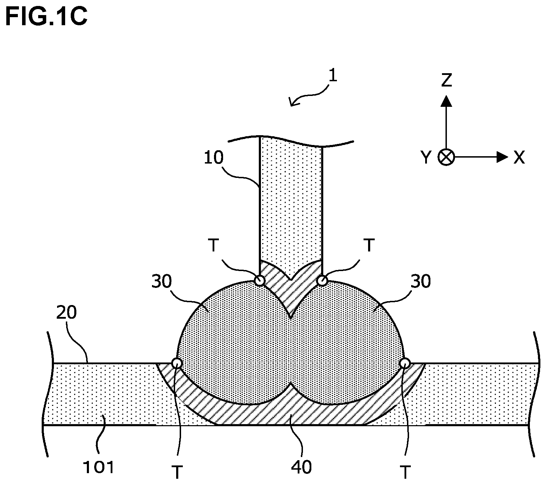

Such a "toe T" is defined not only for a lap fillet welded joint as in FIG. 1A, similarly defined but also for a butt welded joint as illustrated in FIG. 1B, a T-welded joint as illustrated in FIG. 1C, and the like.

Further, a heat input by arc welding or laser welding is normally performed from a certain one side of the welded joint 1 in general. The weld bead part 30 is exposed on a surface of the steel sheet serving as a base metal on a heat input side of arc welding or laser welding, and in a further direction in which the heat input by welding propagates, a size of the weld bead part 30 becomes smaller. Thus, a heat input direction during arc welding or during laser welding can be identified by focusing on the presence/absence of the weld bead part 30 exposed on the surface, a spread of the weld bead part 30 (for example, a spread in focusing on a cross section as exemplified in FIG. 1B), and a shape which the weld bead exhibits. Note that the above form in which "the weld bead part 30 is exposed" includes a form in which a scale formed on the weld bead part 30 is exposed.

Further, in this embodiment, in such a joint at which the two steel sheets are at least partly overlapped as the lap fillet welded joint illustrated in FIG. 1A and the T-welded joint illustrated in FIG. 1C, the steel sheet located on the heat input side of arc welding or laser welding as described above is set as the first steel sheet 10, and the steel sheet located on a direction side where the heat input by arc welding or laser welding propagates is set as the second steel sheet 20.

As schematically illustrated in FIG. 1A to FIG. 1C, the heat-affected zone 40 is formed around the weld bead part 30. The heat-affected zone 40 is caused by changing a quality of a metal structure of the material steel sheet as a result of the heat input into the material steel sheet by arc welding or laser welding. A size of such a heat-affected zone 40 depends on a heat input amount during arc welding or laser welding, and in general, the higher the heat input amount is, the larger the region of the heat-affected zone 40 also becomes. Further, a section corresponding to the heat-affected zone 40 can be easily distinguished by changing the quality of the metal structure of the material steel sheet because it is different in a state (appearances) when visually observed from a section free from changing the quality of the material steel sheet. The weld bead part 30 and the heat-affected zone 40 are sometimes collectively referred to as a "welded part" below.

### <Regarding non-heat-affected zone>

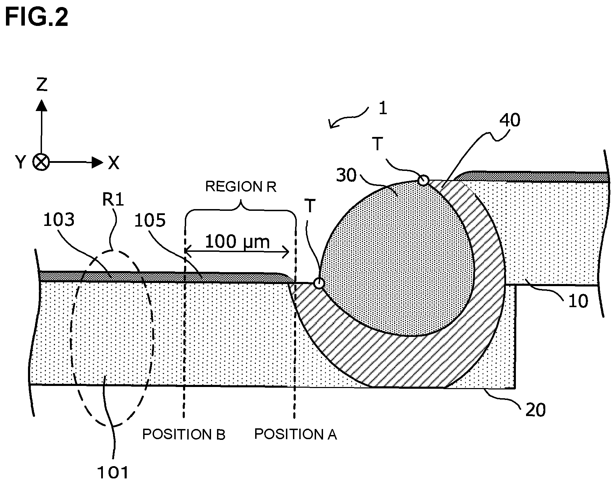

Subsequently, a configuration of a section, which is not affected by heat due to the welding, of the welded joint 1 according to this embodiment is explained in detail with reference to FIG. 2. FIG. 2 is a view schematically illustrating a cross section of the welded joint 1 perpendicular to the extension direction of the weld bead zone 30.

In the following explanation, the section, which is not affected by heat due to welding, of the welded joint 1 (in other words, the section which is not the weld bead part 30 and the heat-affected zone 40) is referred to as a "non-heat-affected zone". In the welded joint 1 as illustrated in FIG. 2, the non-heat-affected zone can be considered to be present in a direction being orthogonal to the extension direction of the weld bead part 30 (the Y-axis direction in FIG. 2) and separating from the toe T (the X-axis direction in FIG. 2) with a certain position near the toe T set as a starting point. For example, a region R1 surrounded by dotted lines in FIG. 2 is present in a position separate from the toe T to some extent (for example, a position 5 mm or more separate from the toe T toward an opposite side to the weld bead part 30 in the X-axis direction), so that it can be obviously considered the non-heat-affected zone.

On the other hand, in a region to some extent, which is not the weld bead part 30 and the heat-affected zone 40 but is located near the toe T, such corrosion resistance as mentioned earlier (in particular, corrosion resistance in the base iron 101) is desired. A second plating layer 105 as described later is present in a region R illustrated in FIG. 2 included in this region. The second plating layer 105 is a plating layer remaining in the region R on a surface of the welded joint 1 even after being subjected to welding of the material steel sheet. Note that the first plating layer can also be referred to as a plating layer, and the second plating layer can also be referred to as a remaining plating layer.

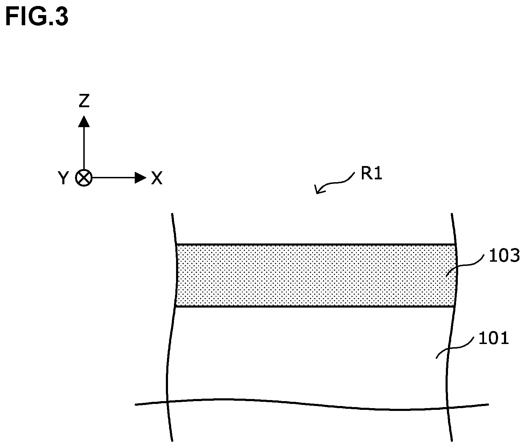

FIG. 3 is a view schematically illustrating a part of a cross section parallel to a sheet thickness direction in the non-heat-affected zone R1. The non-heat-affected zone R1 in at least either the first steel sheet 10 or the second steel sheet 20 has a base iron 101, and a first plating layer 103 located on at least a part of a surface of the base iron 101, as schematically illustrated in FIG. 3. Note that in the non-heat-affected zone R1 of the welded joint 1 according to this embodiment, the first plating layer 103 as described above may be present on one surface of the base iron 101, but they are more preferably present on both surfaces of the base iron 101.

In consideration of a cross-sectional structure of the welded joint 1 in the non-heat-affected zone as illustrated in FIG. 3, in this embodiment, it is configured in order of the toe T, a region where a base material steel sheet (the base iron 101 or the heat-affected zone 40) is exposed (also referred to as a region having no plating layer.), and the region R having the second plating layer 105 in the direction separating from the weld bead part 30 in the X-axis direction near the toe T. In such a configuration, an end portion of the second plating layer 105 at the closest distance in the X-direction to the toe T in cross-sectional view is set as a starting point of the region R. Note that when the above region having no plating layer is not present, but the toe T and the second plating layer 105 are adjacent, the toe T serves as the starting point, that is, the starting point of the region R as described above in this embodiment is applicable to a case of corresponding to a position of the toe T, and also applicable to a case of not corresponding to the position of the toe T.

The region as described above will be explained in detail again below, and first, the base iron 101 and the first plating layer 103 which the non-heat-affected zone has will be explained in detail.

### <<Regarding base iron 101>>

In the welded joint 1 according to this embodiment, dimensions, components, a structure, and mechanical properties of the base iron 101 corresponding to a base material of the material steel sheet are not particularly limited according to one aspect. For example, various steel sheets can be used as the base iron 101 depending on mechanical strength (for example, tensile strength) required for the welded joint 1, or the like. As such steel sheets, for example, there can be cited various kinds of Al-killed steel, ultralow carbon steel containing Ti, Nb, and the like, high-strength steel further containing strengthening elements such as P, Si, and Mn in the ultralow carbon steel, and the like, various steel sheets containing other various components (Cr, N, Cu, B, Ni, Mg, Ca, V, Co, Zn, As, Y, Zr, Mo, Sn, Sb, Ta, W, Pb, Bi, REM and the like), and the like.

In the high-strength steel as described above, for example, using the high-strength steel having a tensile strength of 780 MPa or more (so-called high-strength steel with 780 MPa grade or more) allows robustness as the welded joint 1 to be further improved, which is thus preferable. Further, the high-strength steel having a tensile strength of 980 MPa or more is more preferably used. Here, the tensile strength of the base iron 101 can be measured by a well-known method. As an example, a specimen with a size allowed to be collected from the welded joint 1 among specimens defined in JIS Z 2241 (2011) only needs to be produced from a section corresponding to the base iron 101 of the non-heat-affected zone of the welded joint 1 intended for the measurement of the tensile strength, to measure the tensile strength by the method defined in JIS Z 2241 (2011) with respect to the obtained specimen.

Further, a thickness of the base iron 101 is not particularly limited, but set appropriately according to the mechanical strength and the like required for the welded joint 1.

### <<Regarding first plating layer 103>>

The first plating layer 103 is provided on the base iron 101 in the non-heat-affected zone R1 as schematically illustrated in FIG. 3. Such a first plating layer 103 is derived from a plating layer which a plated steel sheet as a material of the welded joint 1 has. First, a chemical composition of such a first plating layer 103 will be explained in detail below.

### ◊ Regarding chemical composition of first plating layer 103

The chemical composition of the first plating layer 103 according to this embodiment has, according to one aspect, a chemical composition containing, by mass%, Al: 0.50 to 5.00%, Mg: 0.50 to less than 3.00%, and Fe: 0.01 to 15.00%, with the balance composed of Zn of 5.0000 mass% or more and impurities. That is, in the chemical composition of the first plating layer 103 according to this embodiment, contents of Al, Mg, and Fe are in the above ranges and a total of these contents is 95.0000 mass% or less, and, the balance is Zn of 5.0000 mass% or more and impurities.

Further, the chemical composition of the first plating layer 103 according to this embodiment has, according to the other aspect, a chemical composition containing, by mass%, Al: 0.50 to 5.00%, Mg: 0.50 to less than 3.00%, and Fe: 0.01 to 15.00%, and further containing one kind or more kinds selected from a group consisting of an element group A, an element group B, an element group C, an element group D, an element group E, an element group F, and an element group G described below, with the balance composed of Zn of 5.0000 mass% or more and impurities. That is, in the chemical composition of the first plating layer 103 according to this embodiment, contents of Al, Mg, and Fe are in the above ranges and a total of these contents of Al, Mg, Fe, and the element group A to the element group G is 95.0000 mass% or less, and the balance is Zn of 5.0000 mass% or more and impurities.
[Element group A]: one kind or two kinds selected from a group consisting of Si: more than 0% to 10.00% or less, and Ca: more than 0% to 4.00% or less
[Element group B]: one kind or more kinds selected from a group consisting of Sb: more than 0% to 0.5000% or less, Pb: more than 0% to 0.5000% or less, and Sr: more than 0% to 0.5000% or less
[Element group C]: one kind or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, and Mo: more than 0% to 1.0000% or less
[Element group D]: Sn: more than 0% to 1.0000% or less
[Element group E]: one kind or more kinds selected from a group consisting of Zr: more than 0% to 1.0000% or less, Ag: more than 0% to 1.0000% or less, and Li: more than 0% to 1.0000% or less
[Element group F]: one kind or more kinds selected from a group consisting of La: more than 0% to 0.5000% or less, Ce: more than 0% to 0.5000% or less, and Y: more than 0% to 0.5000% or less
[Element group G]: B: more than 0% to 0.5000% or less

Thus, the first plating layer according to this embodiment is a plating layer having the chemical composition containing, by mass%, Al: 0.50 to 5.00%, Mg: 0.50 to less than 3.00%, and Fe: 0.01 to 15.00%, and selectively containing one kind or more kinds selected from the group consisting of the element group A, the element group B, the element group C, the element group D, the element group E, the element group F, and the element group G, with the balance composed of Zn of 5.0000 mass% or more and impurities.

### [Al: 0.50 to 5.00 mass%]

Al is an element necessary to constitute a main metal structure (Zn-Al-Mg-based metal structure) of the first plating layer 103 according to this embodiment, and is contained over a certain level to ensure corrosion resistance of a section serving as the heat-affected zone and corrosion resistance of a section serving as the non-heat-affected zone as the plated steel sheet. When an Al content in the first plating layer 103 is less than 0.50 mass%, the corrosion resistance of the sections serving as the heat-affected zone and the non-heat-affected zone as described above cannot be ensured. Further, a ratio of a Zn phase increases, so that burning (oxidation) of the plating layer and a generation amount of LME increase. Therefore, in the first plating layer 103 according to this embodiment, the Al content is 0.50 mass% or more. The Al content is preferably 1.00 mass% or more, and more preferably 1.50 mass% or more.

On the other hand, when the Al content in the first plating layer 103 exceeds 5.00 mass%, an Al-Fe-based intermetallic compound phase (an Al₅Fe phase, an AlFe phase, an Al₂Fe phase, an Al₃Fe phase, or the like) is formed in preference to an Fe-Zn-based intermetallic compound phase during welding, so that an Fe-Zn layer 111 cannot be sufficiently formed. Therefore, in the first plating layer 103 according to this embodiment, the Al content is 5.00 mass% or less. The Al content is preferably 4.00 mass% or less, and more preferably 3.00 mass% or less. The Al content is in the range as described above, thereby allowing corrosion resistance of the welded joint 1 to be ensured to sufficiently form the Fe-Zn layer 111.

### [Mg: 0.50 to less than 3.00 mass%]

Mg is an element necessary to constitute the main metal structure (Zn-Al-Mg-based metal structure) of the first plating layer 103 according to this embodiment, and is contained over a certain level to ensure the corrosion resistance of the section serving as the heat-affected zone and the corrosion resistance of the section serving as the non-heat-affected zone as the plated steel sheet. When the Al content in the first plating layer 103 is less than 0.50 mass%, the corrosion resistance of the sections serving as the heat-affected zone and the non-heat-affected zone as described above cannot be ensured. Further, the ratio of the Zn phase increases, so that the burning (oxidation) of the plating layer and the generation amount of LME increase. Therefore, in the first plating layer 103 according to this embodiment, a Mg content is 0.50 mass% or more. The Mg content is preferably 1.00 mass% or more, and more preferably 1.50 mass% or more.

On the other hand, when the Mg content in the first plating layer 103 is 3.00 mass% or more, intermetallic compounds of Mg and Fe, and, with other alloying elements are formed in preference during welding, so that the Fe-Zn layer 111 cannot be sufficiently formed. Therefore, in the first plating layer 103 according to this embodiment, the Mg content is less than 3.00 mass%. The Mg content is preferably 2.50 mass% or less, and more preferably 2.00 mass% or less. The Mg content is in the range as described above, thereby allowing the corrosion resistance of the welded joint 1 to be ensured to sufficiently form the Fe-Zn layer 111.

### [Fe: 0.01 to 15.00 mass%]

Fe is an element necessary to constitute the Fe-Zn layer 111 of the first plating layer 103 according to this embodiment, and is contained over a certain level. Elements constituting the base iron 101 sometimes mix from the base iron 101 into the first plating layer 103. In particular, in a hot-dip plating method, the elements constituting the base iron 101 easily mix into the first plating layer 103 due to interdiffusion of the elements by a solid-liquid reaction between the base iron 101 and the first plating layer 103. Thus, a part of Fe contained in the first plating layer 103 according to this embodiment is contained by mixing from the base iron 101 to be contained during welding. Further, Fe may be intentionally added into a plating bath used in manufacturing the first plating layer 103 in a range where the effect of the present invention is not impaired. An Fe content is set to 0.01 mass% or more so as to cause the Fe-Zn layer 111 to have a later-described predetermined thickness. In another viewpoint, when the above interdiffusion is promoted, adhesiveness between the base iron 101 and the first plating layer 103 improves. From the viewpoint of the improvement in the adhesiveness between the base iron 101 and the first plating layer 103, the Fe content in the first plating layer 103 is preferably 0.20 mass% or more.

On the other hand, when the Fe content in the plating bath increases, high melting point intermetallic compounds of Fe and Al are formed in the plating bath, and such high melting point intermetallic compounds adhere to the first plating layer 103 as dross to tend to significantly degrade an appearance quality, which is thus undesirable. From such a viewpoint, the Fe content in the plating bath is adjusted, so that the Fe content in the first plating layer 103 is 15.00 mass% or less. The Fe content in the first plating layer 103 is preferably 10.00 mass% or less, and more preferably 5.00 mass% or less.

In the first plating layer 103, the balance of the above Al, Mg, and Fe is Zn of 5.0000 mass% or more and impurities.

Zn is an element necessary to constitute the main metal structure (Zn-Al-Mg-based metal structure) of the first plating layer 103 according to this embodiment, and an element important for improving the corrosion resistance of the plated steel sheet. Further, the first plating layer 103 contains the above Al, Mg, and Fe in the above ranges, and further contains Zn of 5.0000 mass% or more, thereby allowing suppression of the LME during welding.

Subsequently, the element group A to the element group E which the chemical composition of the first plating layer 103 according the other aspect of this embodiment can selectively have will be explained in detail.

Note that in the first plating layer 103 according to this embodiment, when at least any of the elements belonging to the following element group B to element group E is contained, it is preferable to contain at least any of the elements belonging to the following element group B to element group E within the following contents and in a total content of 5.0000 mass% or less.

Such effects expressed by addition of the elements as described in detail below can be enjoyed without impairing one another by setting the total content of the elements belonging to the element group B to the element group E to 5.0000 mass% or less. The total content of the elements belonging to the element group B to the element group E is preferably 1.0000 mass% or less, and more preferably 0.2000 mass% or less.

Further, in the other aspect of the first plating layer 103 according to this embodiment, it is more preferable that the first plating layer 103 contains Mg of 0.50 to less than 3.00 mass% and contains Ca of not less than 0.05 mass% nor more than 4.00 mass% as the element group A, as the chemical composition. The first plating layer 103 has such a chemical composition, thereby allowing the expression of more excellent corrosion resistance.

### ◊ Element group A

In the other aspect of the first plating layer 103 according to this embodiment, the element group A which the first plating layer 103 can contain will be explained. At least either of the elements in the element group A indicated below is the element which can be contained in the first plating layer 103 in place of a part of Zn of the balance.
[Element group A]: one kind or two kinds selected from a group consisting of Si: more than 0% to 10.00% or less, and Ca: more than 0% to 4.00% or less

### [Si: 0 to 10.00 mass%]

A case of not containing Si in the first plating layer 103 according to this embodiment can also be considered, and thus a lower limit of a content thereof is 0 mass%. On the other hand, Si is an element capable of suppressing excessive growth of an Fe-Al-based metal structure formed at an interface between the first plating layer 103 and the base iron 101 and further improving the adhesiveness between the plating layer and the base iron 101. When Si is contained in the first plating layer 103, a content of Si is preferably 0.05 mass% or more, and more preferably 0.20 mass% or more to suppress the excessive growth of the Fe-Al-based metal structure. On the other hand, when the content of Si exceeds 10.00 mass%, there is a possibility of excessively forming a high melting point intermetallic compound with Mg to inhibit the formation of an Al-Mg oxide having a Zn burning (oxidation) suppression effect, and thus it becomes difficult to suppress Zn burning (oxidation) in welding such a plated steel sheet. From such a viewpoint, the Si content in the first plating layer 103 is preferably 2.00 mass% or less.

Further, when the Si content in the plating bath for manufacturing the first plating layer 103 is too high, viscosity of the plating bath may increase more than necessary, and operability during manufacturing of the plated steel sheet (hereinafter, referred to as "plating operability".) may decrease. Therefore, the Si content in the first plating layer 103 is preferably 5.00 mass% or less, and more preferably 2.00 mass% or less by adjusting the Si content in the plating bath from the viewpoint of plating operability.

### [Ca: 0 to 4.00 mass%]

A case of not containing Ca in the first plating layer 103 according to this embodiment can also be considered, and thus a lower limit of a content thereof is 0 mass%. On the other hand, when Ca is contained in the first plating layer 103, it forms intermetallic compounds with Al and Zn. Furthermore, when Si is contained together with Ca in the first plating layer 103, Ca forms an intermetallic compound with Si. These intermetallic compound phases have a high melting point and a stable structure, thus allowing further suppression of the LME during welding of the plated steel sheet. When Ca is contained in the first plating layer 103, such a suppression effect of the LME during welding is expressed by setting a Ca content to 0.01 mass% or more. The Ca content in the first plating layer 103 is more preferably 0.10 mass% or more.

On the other hand, when the Ca content in the first plating layer 103 exceeds 4.00 mass%, the corrosion resistance of the plated steel sheet may decrease. From such a viewpoint, the Ca content in the first plating layer 103 is 4.00 mass% or less. The Ca content in the first plating layer 103 is preferably 2.50 mass% or less, and more preferably 1.50 mass% or less.

### ◊ Element group B

Subsequently, in the other aspect of the first plating layer 103 according to this embodiment, the element group B which the first plating layer 103 can contain will be explained. At least any of the elements in the element group B indicated below is the element which can be contained in the first plating layer 103 in place of a part of Zn of the balance.
[Element group B]: one kind or more kinds selected from a group consisting of Sb: more than 0% to 0.5000% or less, Pb: more than 0% to 0.5000% or less, and Sr: more than 0% to 0.5000% or less
[Sb: 0 to 0.5000 mass%]
[Pb: 0 to 0.5000 mass%]
[Sr: 0 to 0.5000 mass%]

A case of not containing Sb, Pb, and Sr in the first plating layer 103 according to this embodiment can also be considered, and thus a lower limit of a content of each of these elements is 0 mass%. On the other hand, when at least any of Sb, Pb, and Sr is contained in the first plating layer 103, spangles are formed on a surface of the first plating layer 103, so that metallic luster can be improved. Thus, from the viewpoint of further improvement in design of the plated steel sheet, at least any of Sb, Pb, and Sr is preferably contained in the first plating layer 103. Such a design improvement effect is expressed when the content of at least any of Sb, Pb, and Sr is 0.0500 mass% or more. Therefore, when at least any of Sb, Pb, and Sr is contained in the first plating layer 103, it is preferable that the contents of these elements are each independently set to 0.0500 mass% or more.

On the other hand, when the first plating layer 103 in which any of the contents of Sb, Pb, and Sr exceeds 0.5000 mass% is formed, a generation amount of dross in the plating bath used to form the first plating layer 103 increases, and a plated steel sheet with good plating properties cannot be manufactured. Therefore, the contents of Sb, Pb, and Sr in the first plating layer 103 are each independently 0.5000 mass% or less. It is preferable that the contents of Sb, Pb, and Sr are each independently 0.2000 mass% or less.

### ◊ Element group C

Subsequently, in the other aspect of the first plating layer 103 according to this embodiment, the element group C which the first plating layer 103 can contain will be explained. At least any of the elements in the element group C indicated below is the element which can be contained in the first plating layer 103 in place of a part of Zn of the balance.
[Element group C]: one kind or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, and Mo: more than 0% to 1.0000% or less
[Cu: 0 to 1.0000 mass%]
[Ti: 0 to 1.0000 mass%]
[Cr: 0 to 1.0000 mass%]
[Nb: 0 to 1.0000 mass%]
[Ni: 0 to 1.0000 mass%]
[Mn: 0 to 1.0000 mass%]

A case of not containing Cu, Ti, Cr, Nb, Ni, and Mn in the first plating layer 103 according to this embodiment can also be considered, and thus a lower limit of a content of each of these elements is 0 mass%. On the other hand, when at least any of Cu, Ti, Cr, Nb, Ni, and Mn is contained in the first plating layer 103, these elements are incorporated into an Al-Fe alloy layer formed by the welding when such a plated steel sheet is welded, and the corrosion resistance of the formed welded part can be further improved. Such an improvement effect of the corrosion resistance of the welded part is expressed when the content of at least any of Cu, Ti, Cr, Nb, Ni, and Mn in the first plating layer 103 is 0.0050 mass% or more. Therefore, when at least any of Cu, Ti, Cr, Nb, Ni, and Mn is contained in the first plating layer 103, it is preferable that the contents of these elements are each independently set to 0.0050 mass% or more.

On the other hand, when the first plating layer 103 in which any of the contents of Cu, Ti, Cr, Nb, Ni, and Mn exceeds 1.00 mass% is formed, these elements form various intermetallic compounds in the plating bath to form the first plating layer 103, causing the viscosity of the plating bath to increase to make it impossible to manufacture a plated steel sheet with good plating properties. Therefore, the contents of Cu, Ti, Cr, Nb, Ni, and Mn in the first plating layer 103 are each independently set to 1.0000 mass% or less. It is preferable that the contents of Cu, Ti, Cr, Nb, Ni, and Mn are each independently 0.2000 mass% or less.

### [Mo: 0 to 1.00 mass%]

A case of not containing Mo in the first plating layer 103 according to this embodiment can also be considered, and thus a lower limit of a content thereof is 0 mass%. On the other hand, when Mo is contained in the first plating layer 103, the corrosion resistance can be improved. Such an improvement effect of the corrosion resistance is expressed when a content of Mo is 0.0100 mass% or more. Therefore, when Mo is contained, the content thereof is preferably set to 0.0100 mass% or more.

On the other hand, a case of forming the first plating layer 103 in which the content of Mo exceeds 1.00 mass% causes a large amount of dross to be generated in the plating bath to be used, which is thus undesirable. Therefore, the content of Mo is 1.0000 mass% or less. The content of Mo is preferably 0.0500 mass% or less.

### ◊ Element group D

Subsequently, in the other aspect of the first plating layer 103 according to this embodiment, the element group D which the first plating layer 103 can contain will be explained. The element in the element group D indicated below is the element which can be contained in the first plating layer 103 in place of a part of Zn of the balance.
[Element group D]: Sn: more than 0% to 1.00% or less
[Sn: 0 to 1.00 mass%]

A case of not containing Sn in the first plating layer 103 according to this embodiment can also be considered, and thus a lower limit of a content thereof is 0 mass%. Sn is an element which increase a Mg dissolution rate when the first plating layer 103 containing Sn is placed in the corrosive environment. When the Mg dissolution rate increases, Mg ions are supplied to a portion where the base material steel sheet is exposed, to further improve the corrosion resistance. From such a viewpoint, when Sn is contained, the content thereof is preferably set to 0.0050 mass% or more.

On the other hand, excessive addition of Sn may excessively accelerate the Mg dissolution rate, and the corrosion resistance of the plated steel sheet may decrease. Such an increase in the Mg dissolution rate becomes more pronounced when the content of Sn exceeds 1.0000 mass%, and thus the content of Sn is 1.0000 mass% or less. The content of Sn is preferably 0.2000 mass% or less.

### ◊ Element group E

Subsequently, in the other aspect of the first plating layer 103 according to this embodiment, the element group E which the first plating layer 103 can contain will be explained. At least any of the elements in the element group E indicated below is the element which can be contained in the first plating layer 103 in place of a part of Zn of the balance.
[Element group E]: one kind or more kinds selected from a group consisting of Zr: more than 0% to 1.0000% or less, Ag: more than 0% to 1.0000% or less, and Li: more than 0% to 1.0000% or less
[Zr: 0 to 1.0000 mass%]
[Ag: 0 to 1.0000 mass%]
[Li: 0 to 1.0000 mass%]

A case of not containing Zr, Ag, and Li in the first plating layer 103 according to this embodiment can also be considered, and thus a lower limit of a content of each of these elements is 0 mass%. On the other hand, when at least any of Zr, Ag, and Li is contained in the first plating layer 103, the plating operability can be further improved. Such an improvement effect of platability is expressed when the content of at least any of Zr, Ag, and Li in the first plating layer 103 is 0.0100 mass% or more. Therefore, when at least any of Zr, Ag, and Li is contained, it is preferable that the contents of these elements are each independently set to 0.0100 mass% or more.

On the other hand, when the first plating layer 103 in which any of the contents of Zr, Ag, and Li exceeds 1.0000 mass% is formed, a large amount of dross is likely to be generated in the plating bath used to form the first plating layer 103. Therefore, the content of at least any of Zr, Ag, and Li is independently 1.0000 mass% or less. It is preferable that the content of at least any of Zr, Ag, and Li is independently 0.1000 mass% or less.

### ◊ Element group F

Subsequently, in the other aspect of the first plating layer 103 according to this embodiment, the element group F which the first plating layer 103 can contain will be explained. At least any of the elements in the element group F indicated below is the element which can be contained in the first plating layer 103 in place of a part of Zn of the balance.
[Element group F]: one kind or more kinds selected from a group consisting of La: more than 0% to 0.5000% or less, Ce: more than 0% to 0.5000% or less, and Y: more than 0% to 0.5000% or less
[La: 0 to 0.5000 mass%]
[Ce: 0 to 0.5000 mass%]
[Y: 0 to 0.5000 mass%]

A case of not containing La, Ce, and Y in the first plating layer 103 according to this embodiment can also be considered, and thus a lower limit of a content of each of these elements is 0 mass%. On the other hand, La, Ce, and Y are elements which express almost the same effect as Ca, and further suppress the blowhole formation during welding. This is because an atomic radius of each element is close to an atomic radius of Ca. When these elements are contained in the first plating layer 103, they replace a Ca position. Therefore, these elements are detected at the same position as Ca in EDS (energy dispersive X-ray spectroscopy). Further, even when these elements become oxides after welding of the plated steel sheet, the oxides of these elements are detected at the same position as CaO.

The contents of these elements are each independently set to 0.0100 mass% or more, and thereby such a suppression effect of the blowhole formation during welding is expressed. Therefore, when at least any of Zr, Ag, and Li is contained, it is preferable that the contents of these elements are each independently set to 0.01 mass% or more. It is more preferable that the contents of La, Ce, and Y in the first plating layer 103 are each independently 0.0500 mass% or more.

On the other hand, when the La, Ce, and Y contents are too high in the plating bath for manufacturing the first plating layer 103, the viscosity of the plating bath may increase more than necessary and the plating operability may decrease. Therefore, the La, Ce, and Y contents in the plating bath are adjusted from the viewpoint of the plating operability, so that the contents of La, Ce, and Y are each independently 0.5000 mass% or less. It is preferable that the contents of La, Ce, and Y are each independently 0.1000 mass% or less.

### ◊ Element group G

Subsequently, in the other aspect of the first plating layer 103 according to this embodiment, the element group G which the first plating layer 103 can contain will be explained. The element in the element group G indicated below is the element which can be contained in the first plating layer 103 in place of a part of Zn of the balance.
[Element group G]: B: more than 0% to 0.5000% or less
[B: 0 to 0.5000 mass%]

A case of not containing B in the first plating layer 103 according to this embodiment can also be considered, and thus a lower limit of a content thereof is 0 mass%. On the other hand, when B is contained in the first plating layer 103, it has the effect of further suppressing the LME. This is presumably because when B is contained in the first plating layer 103, it forms various intermetallic compounds by combining with at least any of Zn, Al, Mg, and Ca. Further, the presence of B in the first plating layer 103 is considered to have the effect of suppressing the LME of the base material steel sheet by diffusing B from the first plating layer 103 into the base material steel sheet and strengthening grain boundary. Furthermore, the various intermetallic compounds formed with respect to B presumably also act on suppression of the Zn burning (oxidation) during welding because of their extremely high melting points. These improvement effects are expressed by containing B of 0.0500 mass% or more. Therefore, when B is contained, the content of B is preferably 0.0500 mass% or more.

On the other hand, in order to contain B in the first plating layer 103, excessively containing B in the plating bath causes a rapid increase in a plating melting point to lead to a decrease in the plating operability, and plated steel sheets excellent in plating properties cannot be manufactured. Such a decrease in the plating operability becomes pronounced when the content of B exceeds 0.5000 mass%, and thus the content of B is 0.5000 mass% or less. The content of B is preferably 0.1000 mass% or less.

### [Measurement method of chemical component]

Chemical components of the above first plating layer 103 can be measured using ICP-AES (inductively coupled plasma atomic emission spectrometry) or ICP-MS (inductively coupled plasma mass spectrometry). Note that the ICP-AES shall be used when analyzing chemical components down to 0.1 mass% units, and the ICP-MS shall be used when analyzing chemical components in trace amounts of less than 0.1 mass%. A sample cut from the non-heat-affected zone of the welded joint 1 is immersed in a 10% HCl aqueous solution with an inhibitor added for about one minute to peel off a portion of the plating layer, and the solution dissolving the plating layer is prepared. The chemical components as the overall average of the plating layer can be obtained by analyzing the obtained solution by the ICP-AES or the ICP-MS.

### ◊ Regarding coating weight of first plating layer 103

Although a coating weight of the first plating layer 103 as explained above is not particularly specified, for example, it is preferably about 15 to 250 g/m² per one side of the base iron 101. The coating weight of the first plating layer 103 is in the range as described above, thereby allowing the first plating layer 103 according to this embodiment to exhibit sufficient corrosion resistance. A thickness of the first plating layer 103 having such a coating weight is generally about 5 to 40 µm.

Note that such a coating weight of the first plating layer 103 is measured as follows. First, a sample is cut into a size of 30 mm × 30 mm in plan view from the non-heat-affected zone of the welded joint 1, and a mass of the sample is measured beforehand. Note that the sample is cut entirely in a thickness direction when cut thereinto. A tape seal is applied to one side of the sample to prevent the plating layer on this side from dissolving in the next process. Such a sample is then immersed in the 10% HCl aqueous solution with an inhibitor added, the plating layer 103 is peeled off by pickling, and the mass of the sample after pickling is measured. From a change in the mass of the sample before and after pickling, the coating weight of the first plating layer 103 per one side can be determined.

### ◊ Regarding metal structure of first plating layer 103

Subsequently, the metal structure of the first plating layer 103 having the chemical composition as explained above will be explained.

The first plating layer 103 according to this embodiment has the chemical composition as describe above, and is formed through such a manufacturing method as described in detail below, thereby containing the Fe-Zn-based intermetallic compound phase, a Mg-Zn structure, and a metal phase and an intermetallic compound phase such as an ηZn phase and an α-(Al, Zn) phase, and, a layer or a structure formed of them. The Fe-Zn-based intermetallic compound phase includes one kind or more kinds of a ζ phase (FeZn₁₃), a δ1 phase (FeZn₇), a Γ1 phase (Fe₃Zn₂₁), or a Γ phase (Fe₃Zn₁₀). Further, the Mg-Zn structure includes a Mg-Zn-based intermetallic compound phase including one kind or more kinds of a MgZn₂ phase, a Mg₂Zn₃ phase, a MgZn phase, or a Mg phase, and an ηZn phase. Further, depending on the elements which the first plating layer 103 can further contain, the metal structure such as an Al-Si-Ca phase, an Al-Si-Ca-Fe phase, a Mg₂Si phase, or a Mg₂Sn phase can be contained in addition to the phases as described above. The first plating layer 103 according to this embodiment has the metal structure as described above, thereby exhibiting properties of suppressing occurrence of the LME and also having the excellent corrosion resistance.

Here, what kind of metal structure the first plating layer 103 according to this embodiment has can be identified by observing a cross section of the first plating layer 103 with the SEM. That is, a solidified structure of the first plating layer 103 is observed by the SEM, and what kind of metal structure the first plating layer 103 has can be identified from a point analysis result with a SEM-EPMA (electron probe micro analyzer) in the observation field.

In more detail, JXA-8500 manufactured by JEOL Ltd., for example, is used as an analyzer, observation positions are set as five arbitrary points in the non-heat-affected zone R1, and a size of a region to be observed per one point is set to 40 µm × 40 µm. Such a region is observed at a magnification of 4000 times as an acceleration voltage: 15.0 kV, an irradiation current: 5.0 × 10⁻⁷ A, and an irradiation time: 50 milliseconds. After acquiring a reflected electron image in the focused region under such conditions, the point analysis of the metal structures is performed using a contrast of the reflected electron image.

### <<Regarding second plating layer 105>>

The present inventors have focused on the Fe-Zn layer 111 formed of the Fe-Zn-based intermetallic compound phase and the Mg-Zn structure 115 among the metal structures as described above in studying the corrosion resistance of the base material steel sheet relating to the heat-affected zone 40 in the region R located near the toe (hereinafter, also referred to as a "near-toe zone").

In Al-Mg-Zn ternary plating, the Mg-Zn structure 115 is considered advantageous from the viewpoint of improvement in corrosion resistance of the non-heat-affected zone, but considered to contribute to the LME due to contact of the Mg-Zn structure 115 of a liquid phase melted during welding with the base material steel sheet. Thus, the present inventors have also intensively studied such a plated steel sheet as a material as suppress the contact of the base material steel sheet with the Mg-Zn structure 115 of a liquid phase during welding, and come to specify the chemical composition of the plating layer for obtaining such a plated steel sheet as the material, and the manufacturing method of the plated steel sheet.

Using the plated steel sheet achieved from the conception as described above as the material of the weld joint results in that the Fe-Zn layer 111 is formed in a sufficient thickness, and a contact ratio (described later) between the Mg-Zn phase and the base material steel sheet is in a sufficiently low state in the second plating layer 105 in the region R located near the toe in the welded joint 1 according to this embodiment.

As explained earlier, in the welded joint 1 according to this embodiment, an end portion of the second plating layer 105 at the closest distance in the X-axis direction to the toe T in cross-sectional view is set as the starting point of the region R. In the example illustrated in FIG. 2, a position A where the end portion of the second plating layer 105 is observed is the starting point in considering the region R.

Further, in the welded joint 1 according to this embodiment, a position B of 100 µm from the above starting point toward the direction being orthogonal to the extension direction of the weld bead part 30 (the Y-axis direction in FIG. 2) and separating from the toe T (the X-axis direction in FIG. 2) is an end point in considering such a region R.

In this embodiment, the attention is focused on a case of observing a cross section cut in the direction orthogonal to the extension direction (the Z-axis direction in FIG. 2) (an X-Z plane in FIG. 2) with the electron microscope (SEM) in the region R as exemplified in FIG. 2. The cross section cut in the direction orthogonal to the extension direction is simply referred to as a cross section below.

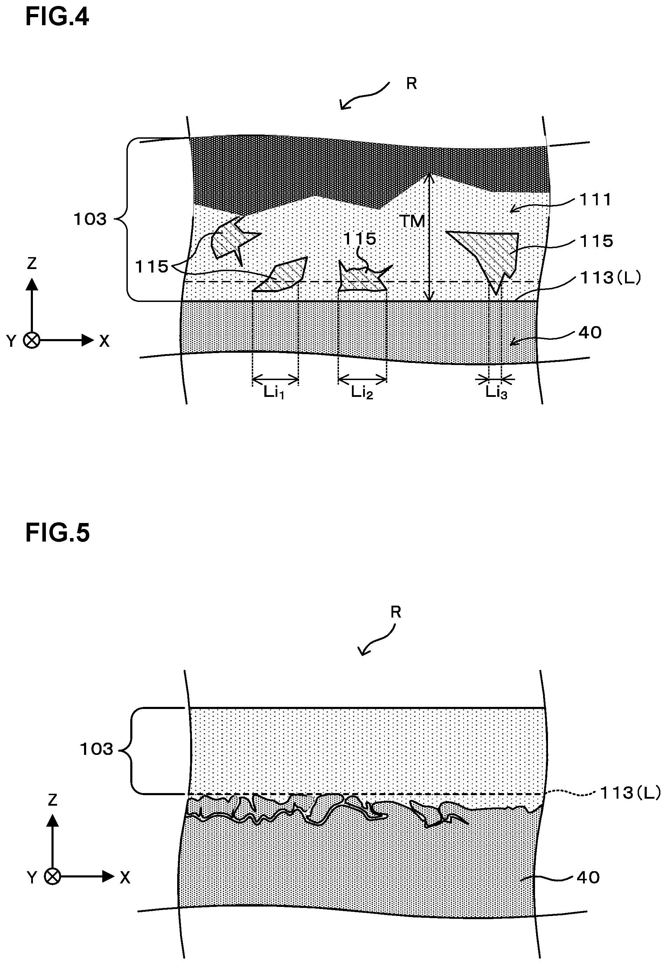

A cross-sectional structure in the region R of the welded joint 1 according to this embodiment will be explained using FIG. 4 and FIG. 5. FIG. 4 and FIG. 5 are each a schematic view illustrating a schematic structure of the cross-sectional structure in one visual field in SEM observation of the region R of the welded joint 1 according to this embodiment. In examples in FIG. 4 and FIG. 5, the second plating layer 105 is formed on the heat-affected zone 40 in the base material steel sheet, but the second plating layer 105 is sometimes formed on the base iron 101.

In FIG. 4, in observing such a cross section, in the welded joint 1 according to this embodiment, an average thickness of the Fe-Zn layer 111 in the second plating layer 105 is 2 µm or more, and when lengths when the respective Mg-Zn structures 115 in each of which at least a part thereof is included within 0.5 µm of an interface 113 between the second plating layer 105 and the heat-affected zone 40 are projected on the interface 113 are each set as Li, a total thereof is set as a contact length ΣLi, and a length in a observation field of the interface 113 is set as a observation field length L, a contact ratio calculated as ΣLi/L × 100 is 10 (%) or less. In other words, the sum total of the lengths, in the direction separating from the toe T, of the Mg-Zn structures included within 0.5 µm of the interface between the second plating layer 105 and the heat-affected zone 40 is 10 µm or less in the region R of 100 µm from the position A to the position B in the direction separating from the toe T. Note that when the second plating layer 105 is formed on the base iron 101, the sum total of the lengths, in the direction separating from the toe T, of the Mg-Zn structures included within 0.5 µm of the interface between the second plating layer 105 and the base iron 101 is 10 µm or less.

The interface 113 is explained in FIG. 5. There is considered a case where the second plating layer 105 and the heat-affected zone 40 are mixed with each other, and a boundary between these does not become a straight line in the region R. That is, as illustrated in FIG. 5, there is considered a case where portions deriving from the heat-affected zone 40 are present to project to the second plating layer 105 side (Z-axis positive direction side in FIG. 5). In this case, the farthest portion (point) projecting to the second plating layer 105 side of the portions deriving from the heat-affected zone 40 is identified in each observation field, and a plane parallel to a surface of the heat-affected zone 40 including this portion (point) (an X-Y plane in FIG. 5, dotted line) is defined as the interface 113 in the observation field. Note that the portion deriving from the heat-affected zone 40 is a black phase displaying a lower luminance in a reflected electron image, and a portion where when the SEM observation is performed on the cross section to acquire element mapping using SEM-EDS, a content of Fe is 60 atom% or more.

Back to FIG. 4, the Fe-Zn layer 111 is a layer formed of the Fe-Zn-based intermetallic compound phase as described above, and a portion where when the SEM observation of a region of 120 µm × 80 µm (corresponding to a magnification of about 1000 times.) including the region R is performed to acquire element mapping using the SEM-EDS in an arbitrary cross section, a content of Fe is 5 to 40 atom%, a content of Zn is 60 to 95 atom%, and a total of contents of the other elements is 10 atom% or less. As illustrated in FIG. 4, the Fe-Zn layer 111 is formed near the interface 113.

The average thickness of the Fe-Zn layer 111 is measured as follows. First, when the SEM observation of the cross section is performed to acquire element mapping using SEM-EPMA, the acquired element mapping is subjected to thresholding by using a thresholding function of a commercially-available image analysis application to identify the Fe-Zn layer. In more detail, subsequently, a maximum length TM, in a direction perpendicular to the interface 113 (the Z-axis direction in FIG. 4), of the Fe-Zn layer 111 is measured in a observation field of each of five cross sections including the region R to calculate an average value of the five acquired maximum lengths TM. The acquired average value is set as the average thickness of the Fe-Zn layer 111.

When the average thickness of the Fe-Zn layer 111 is less than 2µm, the contact of the Mg-Zn structures 115 of the liquid phase melted during welding with the heat-affected zone 40 cannot be sufficiently suppressed, so that the LME cannot be sufficiently suppressed. The average thickness of the Fe-Zn layer is 2 µm or more, thereby allowing the contact ratio between the Mg-Zn structures and the heat-affected zone 40 to be in a sufficiently low state. The average thickness of the Fe-Zn layer 111 is preferably 5 µm or more, and more preferably 7 µm or more.

The Mg-Zn structure 115 is the structure formed of the alloy layer containing the element Mg and the element Zn as described above, and is identified based on a point analysis result with the SEM-EPMA and forms of crystal phases in the reflected electron image in accordance with such a method as explained below. Thereafter, the contact length ΣLi of the Mg-Zn structures 115 in a size of the observation field is measured.

In more detail, a region of 120 µm × 80 µm (corresponding to a magnification of about 1000 times.) in an arbitrary position of a surface of the second plating layer 105 is observed by the SEM. At this time, a structure in which white phases displaying a higher luminance and the black phases displaying a lower luminance are mixed is found in the reflected electron image of the region. Regarding the structure, the point analysis is performed on the white phases and the black phases by the SEM-EDS. A white phase of Zn: more than 80 atom% among the white phases is judged an ηZn phase. Further, a black phase satisfying Mg: 20 to 60 atom%, Zn: 30 to 80 atom%, and the other elements: 10 atom% or less among the black phases is judged the Mg-Zn-based intermetallic compound phase. Furthermore, in the structure in which the white phases and the black phases are mixed, a structure in which the above ηZn phase and the above Mg-Zn-based intermetallic compound phase are mixed is identified as the Mg-Zn structure 115.

The contact length ΣLi of the Mg-Zn structures 115 is measured as follows. First, when the SEM observation of the cross section is performed to acquire element mapping using the SEM-EPMA, the acquired element mapping is subjected to thresholding by using the thresholding function of the commercially-available image analysis application to identify the Mg-Zn structures 115. Then, the Mg-Zn structures 115 in each of which at least a part thereof is included in a range of 0.5 µm in the direction perpendicular to the interface 113 are each projected on the interface 113. In FIG. 4, the range of 0.5 µm in the direction perpendicular to the interface 113 is indicated by a dotted line. Note that only portions within 0.5 µm of the interface 113 in the respective Mg-Zn structures 115 are projected thereon at this time, and portions, over 0.5 µm, separate from the interface 113 are not projected thereon. In FIG. 4, the respective projected lengths Li₁, Li₂, and Li₃ are acquired from a plurality of the Mg-Zn structures 115, and the contact length ΣLi is calculated from a total of these Li₁ + Li₂ + Li₃. Further, the length in the observation field of the interface 113 is set as the observation field length L, and the contact ratio ΣLi/L is calculated. However, the observation field length L is set to 100 µm.

When the contact ratio ΣLi/L exceeds 10%, the contact of the Mg-Zn structures 115 of the liquid phase melted during welding with the heat-affected zone 40 cannot be sufficiently suppressed, so that the LME cannot be sufficiently suppressed. The contact ratio ΣLi/L is 10% or less, thereby allowing a contact area between the Mg-Zn structures 115 and the heat-affected zone 40 to be in a sufficiently low state. The contact ratio ΣLi/L is preferably 5% or less, and more preferably 1% or less. In other words, the sum total of the lengths, in the direction separating from the toe T, of the Mg-Zn structures included within 0.5 µm of the interface between the second plating layer 105 and the heat-affected zone 40 is preferably 5 µm or less, and more preferably 1 µm or less in the region R of 100 µm from the position A to the position B in the direction separating from the toe T. Note that when the second plating layer 105 is formed on the base iron 101, the sum total of lengths, in the direction separating from the toe T, of the Mg-Zn structures included within 0.5 µm of the interface between the second plating layer 105 and the base iron 101 is preferably 5 µm or less, and more preferably 1 µm or less.

### ◊ Regarding tensile strength of plated steel sheet

A tensile strength of the non-heat-affected zone R1 of the welded joint 1 according to this embodiment depends on a tensile strength of a steel sheet, used as the base metal, of the plated steel sheet as the material. Thus, the tensile strength of the non-heat-affected zone R1 of the welded joint 1 according to this embodiment is 780 MPa or more according to one aspect, and 980 MPa or more according to the other aspect. The tensile strength of the welded joint 1 can be measured by a well-known method. As an example, a specimen with a size allowed to be collected from the welded joint 1 among specimens defined in JIS Z 2201 (2011) is produced from the non-heat-affected zone R1 of the welded joint 1 intended for the measurement of the tensile strength, and the tensile strength is measured by the method defined in JIS Z 2241 (2011) with respect to the specimen.

### ◊ Regarding carbon (C) concentration of surface of plated steel sheet

The non-heat-affected zone R1 of the welded joint 1 according to this embodiment is measured in a depth direction (a thickness direction of the base iron 101) by a glow discharge optical emission spectrometry (GDS) with the surface of the first plating layer 103 set as a starting point to measure a depth profile regarding a distribution of Zn, Fe, and C.

Note that such measurement by the GDS can be performed under the following conditions using a commercially available glow discharge optical emission spectrometer.

### ◊ Commercially available glow discharge optical emission spectrometer (for example, (model number GDS850A) manufactured by LECO Japan LLC, or the like)

Ar gas pressure: 0.27 MPa
anode diameter: 4 mmϕ
RF (high frequency) output: 30 W

First, a position which is an interface (GDS interface) between the first plating layer 103 and the base iron 101 is specified in the obtained measurement result. In more detail, a depth at which a curve indicating a strength of Zn and a curve indicating a strength of Fe crosses each other is set as the GDS interface between the first plating layer 103 and the base iron 101 in the depth profile regarding a distribution of the obtained Zn and Fe. Next, in the depth profile regarding a distribution of C, a transition in the depth direction of a C concentration is checked with the above GDS interface set as a starting point. That is, the C concentration focused below can be said to be a C concentration in a portion of the base iron 101 adjacent to the GDS interface with the first plating layer 103.

In the plated steel sheet as the material of the welded joint 1 according to this embodiment, a depth at which a C concentration is 0.05% or less by mass% with the above GDS interface set as the starting point is 10 µm or more according to one aspect. The depth at which the C concentration of the steel sheet as the material is 0.05% or less by mass% is 10 µm or more, thereby allowing further suppression of the LME during manufacturing of the welded joint 1 according to this embodiment (during welding). C in steel is an element which accelerates the LME, and thus becomes a starting point at which a LME crack occurs. Therefore, reducing the C concentration at the GDS interface portion with the first plating layer 103 allows further suppression of the LME during welding and further improvement in resistance to LME. The depth at which the C concentration is 0.05% or less by mass% is preferably 15 µm or more. On the other hand, an upper limit of the depth at which the C concentration is 0.05% or less by mass% is not particularly limited.

Here, controlling conditions of decarburization annealing to be performed on the base iron 101 causes a C concentration of a surface layer portion of the base iron 101 to have a desired value. Such decarburization annealing is performed as necessary during the manufacturing of the plated steel sheet serving as the material of the welded joint 1 according to this embodiment.

The non-heat-affected zone in the welded joint 1 according to this embodiment has been explained above in detail with reference to FIG. 2 to FIG. 5. Note that the non-heat-affected zone in the welded joint 1 according to this embodiment may further have one layer or more layers of various films on the above first plating layer 103. As such films, for example, there can be cited a chromate film, a phosphate film, a chromate-free film, an organic resin film, and the like.

### (Regarding manufacturing method of material steel sheet)

Next, an example of a manufacturing method of the material steel sheet which is the plated steel sheet serving as the material of the welded joint 1 as explained above will be explained. In the material steel sheet of the welded joint 1 according to this embodiment, a strain is applied to a surface of the steel sheet serving as the base metal corresponding to the base iron 101 of the non-heat-affected zone R1 of the welded joint 1 (hereinafter, simply referred to as a base metal steel sheet) by heavy duty grinding. Thereafter, the material steel sheet is manufactured by forming a plating layer corresponding to the first plating layer 103 of the non-heat-affected zone R1 of the welded joint 1 (hereinafter, simply referred to as a plating layer) with respect to the surface on which the strain is applied. Thereafter, the material steel sheet of the welded joint 1 is manufactured by performing specific heat treatment on the plating layer formed on the surface of the base metal steel sheet.

Grinding the surface of the base metal steel sheet with a heavy grinding brush to apply the strain to the surface allows the alloying of Fe and Zn to be promoted when the material steel sheet is provided for welding, to form the Fe-Zn layer with a sufficient thickness. As a result, a contact area between the Mg-Zn structures 115 of the liquid phase during welding and the base material steel sheet is in a sufficiently low state to suppress the LME.

In addition to the hot-dip plating method, a thermal spraying method, a cold spraying method, a sputtering method, a vapor deposition method, an electroplating method, and the like can be applied to the formation of the plating layer. However, the hot-dip plating method is the most preferable in terms of cost to form a plating layer with a generally used level of thickness for automobiles and the like.

Thereafter, the material steel sheet can be manufactured by performing a specific heat treatment process as explained below on the obtained plated steel sheet (the steel sheet having the plating layer on the base metal steel sheet).

An example of the manufacturing method for obtaining the material steel sheet using the hot-dip plating method will be explained in detail below. In the manufacturing process for such a plated steel sheet, first, the base metal steel sheet is rolled by a Sendzimir method to a desired sheet thickness, then coiled and installed in a hot-dip plating line.

In the hot-dip plating line, the base metal steel sheet is continuously passed while uncoiled from a coil. During the sheet passing, the strain is made to be applied to the surface of the base metal steel sheet by the heavy grinding brush provided in a predetermined position. Thereafter, the steel sheet is subjected to heat reduction treatment at 700 to 900°C for more than 0 seconds to 300 seconds or less in an atmosphere, having a dew point of -60 to 10°C, of N₂-(1 to 10)% H₂ gas under an environment less likely to cause the oxidation, in which an oxygen concentration is 20 ppm or less, and is thereafter air-cooled with a N₂ gas to around a bath temperature of the plating bath at a subsequent stage + 20°C by an annealing facility provided on the line, to be immersed in the plating bath, for example. Note that in the above flow, the strain is applied to the base metal steel sheet before annealing, but the alloying of Fe and Zn can be promoted even when at least a part of the applied strain is opened by annealing.

In the heat reduction treatment process, the surface of the base metal steel sheet may be decarburized. When decaburization is performed, the dew point in the N₂-(1 to 10)% H₂ atmosphere gas in the heat reduction treatment process is set to -10 to 10°C. According to such a manufacturing method including the decarburization, the depth at which the C concentration is 0.05% or less by mass% can be set to be 10 µm or more in the measured result by the GDS in the depth direction of the manufactured plated steel sheet. When no decaburization is performed, the dew point in the N₂-(1 to 10)% H₂ atmosphere gas in the heat reduction treatment process may be set to -30 to -70°C.

Here, a plating alloy in a molten state, having the chemical components as previously described, is prepared in the plating bath. The bath temperature of the plating bath is set to equal to or more than the melting point (for example, about 460 to 660°C) of the plating alloy. In preparing a material for the plating alloy, pure metal (purity of 99% or higher) is preferably used and prepared as the alloy material. First, predetermined amounts of the alloy metals are mixed to obtain the composition of the plating layer as described above, and completely melted into an alloy using a high-frequency induction furnace, an arc furnace, or the like under vacuum or inert gas replacement conditions. Furthermore, the alloy obtained by being mixed in the predetermined components (composition of the above plating layer) is melted in the air, and the obtained melt is used as the plating bath.

Note that there is no particular restriction on using pure metals in the preparation of the plating alloys as described above, and existing Zn alloys, Mg alloys, and Al alloys may be melted and used. At this time, there is no problem as long as even a predetermined composition alloy with few impurities is used.

After the base metal steel sheet is immersed in the plating bath as described above, it is pulled up at a predetermined speed. At this time, a plating coating weight is controlled by, for example, a N₂ wiping gas so that the plating layer to be formed has the desired thickness. Here, as conditions other than the bath temperature, general plating operation conditions only need to be applied, and special facilities and conditions are unnecessary.

Subsequently, a first cooling process and a second cooling process as described below are performed on the plating alloy in a molten state located on the steel sheet to make the plating alloy in the molten state into the plating layer. The first cooling process and the second cooling process are explained in detail below.

The first cooling process is a cooling process which is performed when the temperature of the plating alloy is in a range of the bath temperature to 250°C, and the plated steel sheet in the temperature range as described above is rapidly cooled at an average cooling rate of 10°C/second or more under an atmosphere with a dew point of -20°C or less. Note that when the hot-dip plating method is employed in the plating process, such a first cooling process is performed from immediately after the steel sheet comes out of the plating bath. This causes the plating alloy located on the surface of the base metal steel sheet to solidify to form the plating layer. Here, a relatively coarse oxide film can be avoided from being formed on a surface of a plating layer by setting the dew point of the cooling gas in a range of the bath temperature to 250°C to -20°C or less.

Thereafter, when the temperature of the plating alloy (plating layer) is in a range of 250 to 50°C, the second cooling process is performed. The second cooling process is a process of slowly cooling the plated steel sheet in the temperature range of 250 and 50°C at an average cooling rate of less than 10°C/second under an atmosphere with a dew point of 0°C or more. Here, a relatively dense oxide film is formed on the surface of the plating layer by being under the atmosphere with the dew point of 0°C or more in the range of the temperatures of 250 and 50°C, thereby allowing Z evaporation during welding to be suppressed, and a Zn component to be left even in the heat-affected zone.

Note that regarding a shift of the average cooling rate and the dew point from the first cooling process to the second cooling process, providing two or more piping systems of atmosphere gases to be blown for dew point control allows a smooth shift, which is thus preferable. Further, when both the average cooling rate and the dew point are difficult to shift at the same time with a temperature of 250°C bordered, the average cooling rate may be shifted with 250°C bordered, and the atmosphere gas for the dew point control may be shifted in a range of temperatures of 260 to 240°C.

As described above, the first plating layer 103 in which Zn is less likely to burn (oxidize) can be achieved even during welding by going through such a two-stage cooling process as rapid cooling in the temperature range of the bath temperature to 250°C, and slow cooling in the temperature range of 250 to 50°C.

Here, an interval between an end of the first cooling process and a start of the second cooling process is preferably within three seconds, and the second cooling process is preferably started immediately after the end of the first cooling process. When the interval between the end of the first cooling process and the start of the second cooling process exceeds three seconds, an unintended cooling process occurs and the desired first plating layer 103 cannot be achieved.

Here, a lower limit value of the dew point is not particularly specified in the above first cooling process, but, for example, approximately -90°C is the practical lower limit. Further, the average cooling rate is more preferably 40°C/second or more. Note that an upper limit value of the average cooling rate is not particularly specified, but, for example, approximately 90°C/second is the practical upper limit.

Further, in the above second cooling process, an upper limit value of the dew point is not particularly specified, but, for example, approximately 20°C is the practical upper limit. Further, the average cooling rate is more preferably 4°C/second or less.

Note that even though the strain is applied appropriately to the surface of the base metal steel sheet, one of the first plating layer 103 and the second plating layer 105 in the ranges of this embodiment as described above cannot be achieved after welding when one of the first cooling process and the second cooling process as described above is not performed. The strain is applied appropriately to the surface of the base metal steel sheet, and thereafter both the first cooling process and the second cooling process as described above are further performed, thereby allowing the first plating layer 103 or the second plating layer 105 according to this embodiment to be achieved after welding.

Further, when an alloying heat treatment process (for example, a heat treatment process involving heating to an ultimate sheet temperature of about 480 to 550°C), which is often performed in the manufacture of alloyed hot-dip galvanized steel sheets in general, is performed after the above second cooling process, the Fe-Zn layer 111 with a sufficient thickness cannot be formed during welding, resulting in failing to suppress the LME. From such a viewpoint, it is important not to perform the heat treatment process after the second cooling process.

Here, for the cooling treatment as described above, for example, N₂ gas cooling can be applied. Further, in addition to a N₂ gas, other gases with high heat removal effects such as a He gas and a hydrogen gas may be used as the cooling gas.

Note that as an actual measurement method of the temperature of the plating layer, for example, a contact-type thermocouple (K-type) only needs to be used. By attaching the contact-type thermocouple to the base metal steel sheet, the average temperature of an entire plating layer can be constantly monitored. Also, by mechanically controlling various speeds and thicknesses, and by standardizing various operating conditions such as a preheating temperature of the base metal steel sheet and the temperature of the plating bath, the temperature of the entire plating layer at that point under such manufacturing conditions can be monitored almost accurately. This makes it possible to precisely control the cooling treatment in the first cooling process and the second cooling process. Note that the surface temperature of the plating layer may also be measured by a non-contact radiation thermometer, although this is not as accurate as the contact type.

Further, a relationship between the surface temperature of the plating layer and the average temperature of the entire plating layer may be determined by a simulation of performing a heat conduction analysis. Concretely, the surface temperature of the plating layer and the average temperature of the entire plating layer are determined based on various manufacturing conditions, such as the preheating temperature of the base metal steel sheet, the temperature of the plating bath, the pulling-up speed of the base metal steel sheet from the plating bath, the sheet thickness of the base metal steel sheet, the layer thickness of the plating layer, a heat quantity of heat exchange between the plating layer and the manufacturing facility, and a heat release amount of the plating layer. Thereafter, the obtained results only need to be used to determine the relationship between the surface temperature of the plating layer and the average temperature of the entire plating layer. This makes it possible to estimate the average temperature of the entire plating layer at that time under the manufacturing conditions by actually measuring the surface temperature of the plating layer during the manufacturing of the plated steel sheet. As a result, the cooling treatment in the first cooling process and the second cooling process can be precisely controlled.

The example of the manufacturing method of the material steel sheet has been concretely explained above.

Note that in the manufacturing method of the material steel sheet, a further treatment to form one layer or more layers of various films may be performed after the above second cooling process. As such treatment, for example, there can be cited chromate treatment, phosphate treatment, chromate-free treatment, organic resin film formation treatment, or the like.

Examples of the chromate treatment include electrolytic chromate treatment which forms a chromate film by electrolysis, reactive chromate treatment which forms a film by using reaction with a material and then washes off an excess treatment solution, coating-type chromate treatment which forms a film by applying a treatment solution and drying it without water washing, and the like, and any of the chromate treatments may be used.

As the electrolytic chromate treatment, there can be exemplified the electrolytic chromate treatment using, for example, chromic acid, silica sol, resin (phosphoric acid resin, acrylic resin, vinylester resin, vinyl acetate acrylic emulsion, carboxylated styrene butadiene latex, diisopropanolamine modified epoxy resin, and the like), and hard silica.

As the phosphate treatment, for example, zinc phosphate treatment, calcium zinc phosphate treatment, manganese phosphate treatment, and the like can be exemplified.

The chromate-free treatment is particularly suitable because it does not place a burden on the environment. Such chromate-free treatment includes electrolytic chromate-free treatment which forms a chromate-free film by electrolysis, reactive chromate-free treatment which forms a film by using reaction with a material and then washes off an excess treatment solution, coating-type chromate-free treatment which forms a film by applying a treatment solution and drying it without water washing, and the like, and any of the chromate-free treatments may be used.

Further, the organic resins used in the organic resin film formation treatment are not limited to specific resins, but, for example, various resins such as polyester resins, polyurethane resins, epoxy resins, acrylic resins, polyolefin resins, and modified versions of these resins can be used. Here, the modified versions mean resins in which reactive functional groups contained in a structure of these resins are reacted with other compounds (for example, monomers, crosslinking agents, or the like) containing functional groups, which can react with such functional groups, in the structure.

As the organic resins, one kind of those as described above may be used alone, or more kinds of the organic resins (not modified) may be mixed and used. Further, in the presence of at least one kind of the organic resin, at least one kind of the other organic resins is modified, and one kind or more kinds of organic resins obtained thereby may also be mixed and used. In addition, an organic resin made aqueous by dissolving or dispersing it in water may be used. Furthermore, various coloring pigments and rust preventive pigments may be contained in such organic resin films.

### (Regarding manufacturing method of welded joint)

The welded joint 1 according to this embodiment is manufactured by using the material steel sheet manufactured in the above manner as the material of at least either the first steel sheet 10 or the second steel sheet 20 in manufacturing the welded joint 1, and then arranging such a first steel sheet 10 and such a second steel sheet 20 to be in the shape required for the welded joint 1, and welding the first steel sheet 10 and the second steel sheet 20.

Here, an arc welding method or a laser welding method can be used for the welding of the first steel sheet 10 and the second steel sheet 20. At this time, the state of the region R (near-toe zone) as described above can be achieved by performing the welding under the welding conditions as explained below for each welding method.

In more detail, when the welded joint 1 are manufactured by the arc welding, for example, the first steel sheet 10 and the second steel sheet 20 only need to be welded according to the welding conditions as follows.
Welding current: 250 A, welding voltage: 26.4 V, welding speed: 100 cm/min.
Welding gas: 20% CO₂ + Ar, gas flow rate: 20 L/min.
Welding wire: YGW16, ϕ1.2 mm, manufactured by Nippon Steel Welding & Engineering Co., Ltd.
(C: 0.1 mass%, Si: 0.80 mass%, Mn: 1.5 mass%, P: 0.015 mass%, S: 0.008 mass%, Cu: 0.36 mass%)
Inclination angle of welding torch: 45°

Further, when the welded joint 1 are manufactured by the laser welding, for example, the first steel sheet 10 and the second steel sheet 20 only need to be welded according to the welding conditions as follows.
Output: 7 kW, welding speed: 400 cm/min., forward/backward angle: 0°

An example of the manufacturing method of the welded joint 1 according to this embodiment has been explained above.

### [EXAMPLES]

Hereinafter, the welded joint according to the present invention will be concretely explained while showing examples and comparative examples. Note that the examples shown below are only one example of the welded joint according to the present invention, and the welded joint according to the present invention is not limited to the examples shown below.

In the examples and the comparative examples shown below, as a base metal steel sheet serving as the base iron 101 after welding, three kinds of base metal steel sheets used as steel sheets for underbody were used. The three kinds of base metal steel sheets are each any of the steel sheet having a composition of mild steel with a tensile strength of 440 MPa grade, the steel sheet having a composition of high tensile strength steel with a tensile strength of 780 MPa grade, and the steel sheet having a composition of high tensile strength steel with a tensile strength of 980 MPa grade (all manufactured by Nippon Steel Corporation). A thickness of any of the hot-rolled steel sheets was set to 3.2 mm. Such hot-rolled steel sheets were used to prepare a plurality of specimens with respect to each hot-rolled steel sheet.

With respect to the prepared specimens, the strain was applied to a surface of the specimens using the following two types of heavy grinding brushes. Note that in grinding, a NaOH aqueous solution of 1.0 to 5.0% was applied to the surface of the steel sheet. A strain amount applied to the surface was controlled by appropriately adjusting a brush reduction amount in a range of 0.5 to 10.0 mm and the number of brush rotations in a range of 100 to 1000 rpm. Note that a brash type A is a brush having stronger grinding force between the two types of heavy grinding brushes indicated below. Incidentally, for comparison, a specimen free from such heavy duty grinding was also prepared.
Brush type A: D-100 manufactured by HOTANI Co., Ltd.
Brush type B: M-33 manufactured by HOTANI Co., Ltd.

Plating baths to achieve plating layers with compositions as listed in Table 1 below were each prepared and each installed in a batch-type hot-dip plating test apparatus manufactured in-house, and the above specimens were plated. Here, the temperature of the specimens was measured using a thermocouple spot-welded at the center of the specimens. Further, for the specimens to be immersed in the plating baths, a surface of the plating substrates were subjected to heat reduction treatment at 800°C in a N₂-5% H₂ gas atmosphere in a furnace with the oxygen concentration of 20 ppm or less before immersion in the plating baths. After the heat reduction treatment, the specimens were air-cooled with a N₂ gas, and immersed in the plating baths in the hot-dip plating test apparatus for about three seconds after the temperature of the specimens reached the bath temperature + 20°C.

At the time of heat reduction treatment, decarburization was performed with a dew point in a N₂-4% H₂ atmosphere gas set to 0°C. Further, for comparison, specimens free from decarburization were also prepared with a dew point in a N₂-4% H₂ atmosphere gas set to -40°C. In specimens subjected to decarburization, a depth at which a C concentration was 0.05% or less by mass% was 10 µm or more in measured results by GDS in a depth direction of manufactured plated steel sheets. In the specimens free from decarburization, a depth at which a C concentration was 0.05% or less by mass% was 0 µm, that is, the C concentration on a surface of the specimens was more than 0.05%. The depths at each of which a C concentration in each specimen is 0.05% or less by mass% (C 0.05% or less depth) are listed in Table 1 below.

After the immersion in the plating baths, the specimens were pulled up at a pulling-up speed of 20 to 200 mm/second. At the time of pulling-up, a N₂ wiping gas was used to control a desired plating coating weight. In the following examples and comparative examples, the plating coating weight was controlled so that the coating weight of each plating layer after drying per one side of each specimen was 40 to 120 g/m². After pulling up the specimens from the plating baths, the specimens were cooled from the plating bath temperature to room temperature under the conditions listed in Table 1 below. In the examples and the comparative examples shown below, the second cooling process was started immediately after the end of the first cooling process (that is, the interval between the end of the first cooling process and the start of the second cooling process was set to 0.2 seconds or less).

Here, the steel sheets were cut into a size of 30 mm × 30 mm from the specimens plated as described above, and the steel sheets were immersed in a 10% HCl aqueous solution with an inhibitor added to pickle and peel the plating layers, and thereafter the compositions of the plating layers were each measured by ICP analysis of the elements dissolved in the aqueous solution.

Further, from the obtained specimens, the steel sheets cut into a size of 150 mm × 50 mm were each set as a first steel sheet, and the steel sheets cut into a size of 150 mm × 30 mm were each set as a second steel sheet. Long sides of these steel sheets were overlapped and welded by arc welding (lap fillet welding) to be a welded joint.

Here, welding conditions for the arc welding are as follows.
Welding current: 250 A, welding voltage: 26.4 V, welding speed: 100 cm/min.
Welding gas: 20% CO₂ + Ar, gas flow rate: 20 L/min.
Welding wire: YGW16, ϕ1.2 mm, manufactured by Nippon Steel Welding & Engineering Co., Ltd.
(C: 0.1 mass%, Si: 0.80 mass%, Mn: 1.5 mass%, P: 0.015 mass%, S: 0.008 mass%, Cu: 0.36 mass%)
Inclination angle of welding torch: 45°
Overlap allowance: 10 mm
Steel sheet size: Upper sheet side (first steel sheet) 150 × 50 mm, lower sheet side (second steel sheet) 150 × 30 mm
Gap between steel sheets: 0 mm

Further, welding conditions for the laser welding are as follows.
Output: 7 kW, welding speed: 400 cm/min., forward/backward angle: 0°
Steel sheet size: Upper sheet side (first steel sheet) 150 × 50 mm, lower sheet side (second steel sheet) 150 × 30 mm
Overlap allowance: 10 mm
Gap between steel sheets: 0 mm

### <Evaluation of metal structure of near-toe zone>

Regarding each of the welded joints obtained in the above manner, a cross-section observation of a near-toe zone (region R) was performed with a SEM by the method explained earlier to calculate an average thickness of an Fe-Zn layer 111 and calculate a contact ratio ΣLi/L of Mg-Zn structures 115.

### <Evaluation of corrosion resistance of near-toe zone>

Automotive phosphate conversion treatment (Zn phosphatization, SD5350 system: Nippon Paint Industrial Coding Co. Ltd. standard) and electrodeposition coating (PN110 Power Nix Gray: Nippon Paint Industrial Coding Co., Ltd. standard) were performed on the welded joints after performing the cross-section observation as described above . At this time, an electrodeposited film thickness was set to 20 µm. The samples after the electrodeposition coating were each subjected to a combined cycle corrosion test according to JASO (M609-91) to evaluate a red rust generation timing in the near-toe zone. The evaluation criteria were as follows.

### <<Evaluation Criteria>>

Grade "AAA": More than 60 cycles
"AA": Not less than 45 cycles nor more than 60 cycles
"A": Not less than 30 cycles nor more than 45 cycles
"B": Less than 30 cycles

Further, as long as the red rust generation timing as described above is in 30 cycles or more, the near-toe zone of the focused specimen can be evaluated to have good corrosion resistance.

The obtained results were collectively listed in Table 1 below.

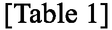

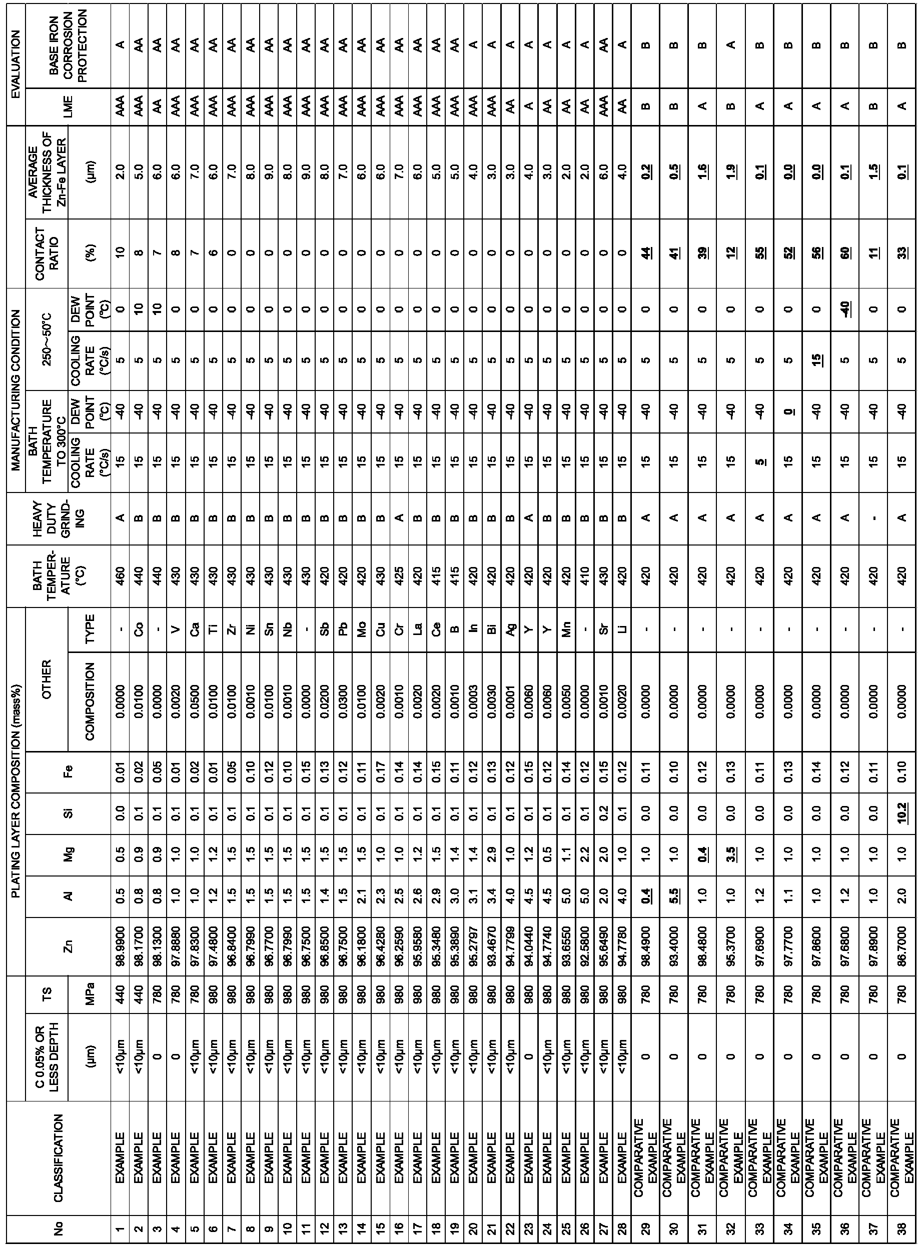

As it is clear from Table 1 above, it is found that examples corresponding to the examples of the present invention can achieve excellent corrosion resistance in the near-toe zone, whereas examples corresponding to the comparative examples of the present invention fail to exhibit sufficient performance in terms of corrosion resistance in the near-toe zone.

Preferred embodiments of the present invention have been described above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impart the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not respective. That is, the technique relating to the present invention can offer other clear effects to those skilled in the art from the description herein in addition to or in place of the above-described effects.

Note that the following configuration also belongs to the technical scope of the present invention.
(1) A welded joint includes a first steel sheet and a second steel sheet connected to a weld bead part whose extension direction is set as a long side in plan view, wherein:
   the first steel sheet and the second steel sheet has a heat-affected zone located around the weld bead part, and a non-heat-affected zone not affected by heat due to welding;
   at least either the first steel sheet or the second steel sheet has a base iron and a first plating layer on the base iron in the non-heat-affected zone;
   the first plating layer is a plating layer having a chemical composition containing, by mass%,
   Al: 0.50 to 5.00%
   Mg: 0.50 to less than 3.00%
   Fe: 0.01 to 15.00%, and
      selectively containing one kind or more kinds selected from a group consisting of an element group A, an element group B, an element group C, an element group D, an element group E, an element group F, and an element group G described below, with the balance composed of Zn of 5.0000 mass% or more and impurities;
   a second plating layer containing a Mg-Zn structure is present on the weld bead part or on the heat-affected zone; and
   when regarding a region, toward a direction being orthogonal to the extension direction of the weld bead part and separating from a toe defined in JIS Z3001 (2018), with an end portion position on the toe side of the second plating layer set as a starting point, in a range from the starting point to 100 µm, a cross section cut in a direction orthogonal to the extension direction is observed by an electron microscope, an average thickness of an Fe-Zn layer formed of an Fe-Zn-based intermetallic compound phase is 2.0 µm or more, and a sum total of lengths in the separating direction of Mg-Zn structures included within 0.5 µm of an interface between the second plating layer and a base material steel sheet which is the base iron or the heat-affected zone is 10 µm or less, in the second plating layer.

   [Element group A]: one kind or two kinds selected from a group consisting of Si: 10.00% or less, and Ca: 4.00% or less
   [Element group B]: one kind or more kinds selected from a group consisting of Sb: 0.5000% or less, Pb: 0.5000% or less, and Sr: 0.5000% or less
   [Element group C]: one kind or more kinds selected from a group consisting of Cu: 1.0000% or less, Ti: 1.0000% or less, Cr: 1.0000% or less, Nb: 1.0000% or less, Ni: 1.0000% or less, Mn: 1.0000% or less, and Mo: 1.0000% or less
   [Element group D]: Sn: 1.0000% or less
   [Element group E]: one kind or more kinds selected from a group consisting of Zr: 1.0000% or less, Ag: 1.0000% or less, and Li: 1.0000% or less
   [Element group F]: one kind or more kinds selected from a group consisting of La: 0.5000% or less, Ce: 0.5000% or less, and Y: 0.5000% or less
   [Element group G]: B: 0.5000% or less
(2) The welded joint according to the above (1), having a chemical composition containing the element group A.
(3) The welded joint according to the above (1) or (2), having a chemical composition containing the element group B.
(4) The welded joint according to any one of the above (1) to (3), having a chemical composition containing the element group C.
(5) The welded joint according to any one of the above (1) to (4), having a chemical composition containing the element group D.
(6) The welded joint according to any one of the above (1) to (5), having a chemical composition containing the element group E.
(7) The welded joint according to any one of the above (1) to (6), having a chemical composition containing the element group F.
(8) The welded joint according to any one of the above (1) to (7), having a chemical composition containing the element group G.
(9) The welded joint according to any one of the above (1) to (8), wherein a tensile strength of the non-heat-affected zone of the first steel sheet and the second steel sheet is 780 MPa grade or more.
(10) The welded joint according to any one of the above (1) to (9), wherein the first plating layer contains Mg: 1.5 mass% or less, and contains Al: 3.0 mass% or less.
(11) The welded joint according to any one of the above (1) to (10), wherein the average thickness of the Fe-Zn layer is 5 µm or more.
(12) The welded joint according to any one of the above (1) to (11), wherein a sum total of lengths in the separating direction of Mg-Zn structures included within 0.5 µm of the interface between the second plating layer and the base material steel sheet is 5 µm or less.
(13) The welded joint according to the above (12), wherein a sum total of lengths in the separating direction of Mg-Zn structures included within 0.5 µm of the interface between the second plating layer and the base material steel sheet is 1 µm or less.
(14) The welded joint according to any one of the above (1) to (13), wherein a depth at which a C concentration is 0.05% or less by mass% is 10 µm or more in a measured result obtained by being measured by a glow discharge optical emission spectrometry in a depth direction of the non-heat-affected zone of the first steel sheet and the second steel sheet.

### [Explanation of Codes]

1 welded joint
10 first steel sheet
20 second steel sheet
30 weld bead part
40 heat-affected zone
101 base material steel sheet
103 first plating layer
105 second plating layer
T toe

## Claims

1. A welded joint comprising a first steel sheet and a second steel sheet connected to a weld bead part whose extension direction is set as a long side in plan view, wherein:
the first steel sheet and the second steel sheet has a heat-affected zone located around the weld bead part, and a non-heat-affected zone not affected by heat due to welding;
at least either the first steel sheet or the second steel sheet has a base iron and a first plating layer on the base iron in the non-heat-affected zone;
the first plating layer is a plating layer having a chemical composition containing, by mass%,
Al: 0.50 to 5.00%
Mg: 0.50 to less than 3.00%
Fe: 0.01 to 15.00%, and
selectively containing one kind or more kinds selected from a group consisting of an element group A, an element group B, an element group C, an element group D, an element group E, an element group F, and an element group G described below, with the balance composed of Zn of 5.0000 mass% or more and impurities;
a second plating layer containing a Mg-Zn structure is present on the weld bead part or on the heat-affected zone; and
when regarding a region, toward a direction being orthogonal to the extension direction of the weld bead part and separating from a toe defined in JIS Z3001 (2018), with an end portion position on the toe side of the second plating layer set as a starting point, in a range from the starting point to 100 µm, a cross section cut in a direction orthogonal to the extension direction is observed by an electron microscope, an average thickness of an Fe-Zn layer formed of an Fe-Zn-based intermetallic compound phase is 2.0 µm or more, and a sum total of lengths in the separating direction of Mg-Zn structures included within 0.5 µm of an interface between the second plating layer and a base material steel sheet which is the base iron or the heat-affected zone is 10 µm or less, in the second plating layer.
[Element group A]: one kind or two kinds selected from a group consisting of Si: 10.00% or less, and Ca: 4.00% or less
[Element group B]: one kind or more kinds selected from a group consisting of Sb: 0.5000% or less, Pb: 0.5000% or less, and Sr: 0.5000% or less
[Element group C]: one kind or more kinds selected from a group consisting of Cu: 1.0000% or less, Ti: 1.0000% or less, Cr: 1.0000% or less, Nb: 1.0000% or less, Ni: 1.0000% or less, Mn: 1.0000% or less, and Mo: 1.0000% or less
[Element group D]: Sn: 1.0000% or less
[Element group E]: one kind or more kinds selected from a group consisting of Zr: 1.0000% or less, Ag: 1.0000% or less, and Li: 1.0000% or less
[Element group F]: one kind or more kinds selected from a group consisting of La: 0.5000% or less, Ce: 0.5000% or less, and Y: 0.5000% or less
[Element group G]: B: 0.5000% or less

2. The welded joint according to claim 1, having a chemical composition containing the element group A.

3. The welded joint according to claim 1, having a chemical composition containing the element group B.

4. The welded joint according to claim 1, having a chemical composition containing the element group C.

5. The welded joint according to claim 1, having a chemical composition containing the element group D.

6. The welded joint according to claim 1, having a chemical composition containing the element group E.

7. The welded joint according to claim 1, having a chemical composition containing the element group F.

8. The welded joint according to claim 1, having a chemical composition containing the element group G.

9. The welded joint according to any one of claims 1 to 8, wherein a tensile strength of the non-heat-affected zone of the first steel sheet and the second steel sheet is 780 MPa grade or more.

10. The welded joint according to any one of claims 1 to 8, wherein the first plating layer contains Mg: 1.5 mass% or less, and contains Al: 3.0 mass% or less.

11. The welded joint according to claim 9, wherein the first plating layer contains Mg: 1.5 mass% or less, and contains Al: 3.0 mass% or less.

12. The welded joint according to any one of claims 1 to 8, wherein the average thickness of the Fe-Zn layer is 5 µm or more.

13. The welded joint according to claim 9, wherein the average thickness of the Fe-Zn layer is 5 µm or more.

14. The welded joint according to any one of claims 1 to 8, wherein a sum total of lengths in the separating direction of Mg-Zn structures included within 0.5 µm of the interface between the second plating layer and the base material steel sheet is 5 µm or less.

15. The welded joint according to claim 9, wherein a sum total of lengths in the separating direction of Mg-Zn structures included within 0.5 µm of the interface between the second plating layer and the base material steel sheet is 5 µm or less.

16. The welded joint according to any one of claims 1 to 8, wherein a sum total of lengths in the separating direction of Mg-Zn structures included within 0.5 µm of the interface between the second plating layer and the base material steel sheet is 1 µm or less.

17. The welded joint according to claim 9, wherein a sum total of lengths in the separating direction of Mg-Zn structures included within 0.5 µm of the interface between the second plating layer and the base material steel sheet is 1 µm or less.

18. The welded joint according to any one of claims 1 to 8, wherein a depth at which a C concentration is 0.05% or less by mass% is 10 µm or more in a measured result obtained by being measured by a glow discharge optical emission spectrometry in a depth direction of the non-heat-affected zone of the first steel sheet and the second steel sheet.

19. The welded joint according to claim 9, wherein a depth at which a C concentration is 0.05% or less by mass% is 10 µm or more in a measured result obtained by being measured by a glow discharge optical emission spectrometry in a depth direction of the non-heat-affected zone of the first steel sheet and the second steel sheet.
